# EUROPEAN PATENT APPLICATION

(11) **EP 2 354 981 A2**
(43) Date of publication of application: **10.08.2011**
(21) Application number: 11150735.6
(22) Date of filing: 12.01.2011
(51) Int. Cl.: G06F 17/30

(54) **Image management apparatus, method of controlling the same, and storage medium storing program therefor**

(30) Priority: 13.01.2010 JP 2010005132
(71) Applicant: CANON KABUSHIKI KAISHA, Ohta-ku Tokyo 146-8501 (JP)
(72) Inventor: Yamakawa, Kanako, Tokyo (JP); Mikawa, Takuma, Tokyo (JP); Hirotani, Yoko, Tokyo (JP)
(74) Representative: Garner, Jonathan Charles Stapleton

(57) **Abstract**

An image management apparatus (101, 102) which makes it possible to classify picked-up images according to the occasion of going-out without burdening a user. An information processing apparatus manages a plurality of image files obtained through shooting processing by an image pickup apparatus, and acquires GPS information indicative of a location of the image pickup apparatus and a time when the location was detected. The information processing apparatus sets one record of the GPS information as reference start time information (S701), and retrieves a GPS information record indicative of a location identical to the location indicated by the reference start time information, as reference end time information (S706). The information processing apparatus classifies image files of respective shooting times occurring between a time indicated by the reference start time information and a time indicated by the reference end time information, into the same group.

## Description

### BACKGROUND OF THE INVENTION

### Field of the Invention

The present invention relates to an image management apparatus for managing images obtained through shooting processing by an image pickup apparatus, a method of controlling the image management apparatus, and a non-transitory computer-readable storage medium storing a computer-executable program for causing a computer to execute the method.

### Description of the Related Art

Now, a user can pick up a very large volume of images using a digital camera and store the picked-up images in the digital camera. This causes a problem that it burdens the user to organize the numerous images. To solve this problem, a method has been proposed in which the distance between each adjacent picked-up images in the order of shooting is calculated based on respective pieces of latitude and longitude information associated with the respective images, and when the calculated distance is not smaller than a threshold value, the images are automatically classified into different groups, respectively.
Another method has also been proposed in which the distance between a reference location and a location where an image was picked up is calculated, and the image is automatically classified into a group based on the calculated distance.

As for images picked up when a user goes out e.g. for a trip, it is often convenient to classify images according to each occasion of going-out. However, the conventional art suffers from a problem that a plurality of images picked up during each occasion of going-out are separated into a plurality of groups formed according to respective shooting locations. Another problem is that a plurality of images picked up at the same location at different shooting times during a plurality of occasions of "going-out" are classified together into the same group.

### SUMMARY OF THE INVENTION

The present invention classifies picked-up images according to the occasion of going-out without burdening a user.

In a first aspect of the present invention, there is provided an image management apparatus as specified in claims 1 and 2.

In a second aspect of the present invention, there is provided an image management apparatus as specified in claim 3.

In a third aspect of the present invention, there is provided an image management apparatus as specified in claim 4

In a fourth aspect of the present invention, there is provided an image management apparatus as specified in claim 5.

In a fifth aspect of the present invention, there is provided an image management apparatus as specified in claim 6.

In a sixth aspect of the present invention, there is provided an image management apparatus as specified in claims 7.

In a seventh aspect of the present invention, there is provided a method of controlling an image management apparatus as specified in claim 8.

In an eighth aspect of the present invention, there is provided a method of controlling an image management apparatus as specified in claim 9.

In a ninth aspect of the present invention, there is provided a method of controlling an image management apparatus as specified in claim 10.

In a tenth aspect of the present invention, there is provided a method of controlling an image management apparatus as specified in claim 11.

In an eleventh aspect of the present invention, there is provided a method of controlling an image management apparatus as specified in claim 12.

In a twelfth aspect of the present invention, there is provided a method of controlling an image management apparatus as specified in claim 13.

In a thirteenth aspect of the present invention, there is provided a non-transitory computer-readable storage medium storing a computer-executable program for causing a computer to execute a method of controlling an image management apparatus as specified in claim 14.

In a fourteenth aspect of the present invention, there is provided a non-transitory computer-readable storage medium storing a computer-executable program for causing a computer to execute a method of controlling an image management apparatus as specified in claim 15.

In a fifteenth aspect of the present invention, there is provided a non-transitory computer-readable storage medium storing a computer-executable program for causing a computer to execute a method of controlling an image management apparatus as specified in claim 16.

In a sixteenth aspect of the present invention, there is provided a non-transitory computer-readable storage medium storing a computer-executable program for causing a computer to execute a method of controlling an image management apparatus as specified in claim 17.

In a seventeenth aspect of the present invention, there is provided a non-transitory computer-readable storage medium storing a computer-executable program for causing a computer to execute a method of controlling an image management apparatus as specified in claim 18.

In an eighteenth aspect of the present invention, there is provided a non-transitory computer-readable storage medium storing a computer-executable program for causing a computer to execute a method of controlling an image management apparatus as specified in claim 19.

According to the present invention, it is possible to classify images picked-up using an image pickup apparatus according to the occasion of going-out without burdening a user.

Further features of the present invention will become apparent from the following description of exemplary embodiments with reference to the attached drawings.

### BRIEF DESCRIPTION OF THE DRAWINGS

FIG. 1 is a diagram showing the configuration of an image management system incorporating an information processing apparatus as an image management apparatus according to a first embodiment of the present invention.

FIG. 2A is a diagram showing positioning information.

FIG. 2B is a diagram showing image file attribute information.

FIG. 2C is a diagram showing group information.

FIG. 3 is a diagram illustrating an example of travel routes of an image pickup apparatus and image files obtained by shooting during travel.

FIG. 4 is a flowchart of an image file-classifying process executed by the information processing apparatus.

FIG. 5 is a view illustrating an example of a screen displaying a classification result.

FIG. 6 is a flowchart of a reference time calculation process executed in a step in FIG. 4 by the information processing apparatus.

FIG. 7 is a flowchart of a group start-end GPS information-detecting process executed by the information processing apparatus.

FIG. 8 is a diagram illustrating an example of travel routes of an image pickup apparatus of an image management system incorporating an information processing apparatus as an image management apparatus according to a second embodiment of the present invention and image files obtained by shooting during the travel.

FIG. 9A is a diagram showing positioning information.

FIG. 9B is a diagram showing image file attribute information.

FIG. 9C is a diagram showing group information.

FIG. 10 is a view illustrating an example of a screen displaying a classification result.

FIG. 11 is a flowchart of a reference time calculation process executed by the information processing apparatus as the image management apparatus according to the second embodiment.

FIG. 12 is a flowchart of a reference spot passage determination process executed by an information processing apparatus as an image management apparatus according to a third embodiment of the present invention.

FIG. 13 is a flowchart of a picked-up image storage process executed by the information processing apparatus.

FIG. 14 is a diagram illustrating an example of travel routes of an image pickup apparatus.

FIG. 15 is a diagram illustrating an example of a folder structure of folders that store images picked up at travel destinations illustrated in FIG. 14.

FIG. 16 is a flowchart of an image file-classifying process executed by an information processing apparatus as an image management apparatus according to a fourth embodiment of the present invention.

FIGS. 17A and 17B are views each illustrating an example of a screen displaying a classification result.

FIG. 18 is a flowchart of a grouping process executed in a step in FIG. 16.

FIG. 19 is a diagram showing an example of images stored in an external storage device.

### DESCRIPTION OF THE EMBODIMENTS

The present invention will now be described in detail below with reference to the accompanying drawings showing embodiments thereof.

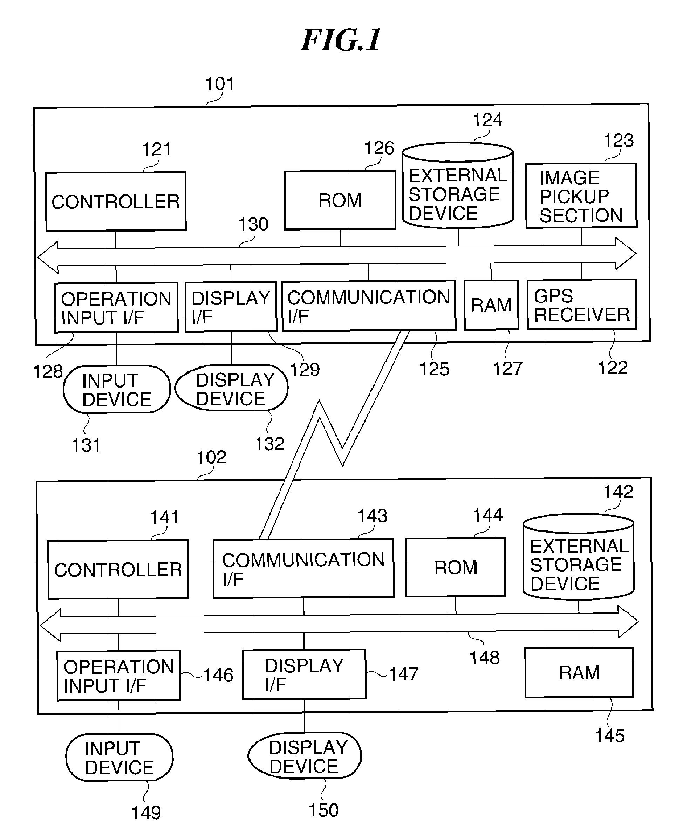

FIG. 1 is a diagram showing the configuration of an image management system incorporating an information processing apparatus as an image management apparatus according to a first embodiment of the present invention. The image management system comprises an image pickup apparatus 101 formed e.g. by a digital camera or a digital video camera, and an information processing apparatus 102 formed e.g. by a personal computer (PC). The image pickup apparatus 101 is connected to the information processing apparatus 102 by wireless communication or wired communication to transmit image files and GPS information, referred to hereinafter, or alternatively, the image pickup apparatus 101 sends image files and GPS information to the information processing apparatus 102 via a storage medium, such as a memory card. It should be noted that GPS stands for "Global Positioning System".

In the present embodiment, the functions of the information processing apparatus 102 may be realized by a single computer or may be realized in a dispersed manner by a plurality of computers, as required. When the functions of the information processing apparatus 102 are realized by a plurality of computers, the computers are communicably connected to each other by a network, such as a local area network (LAN). Further alternatively, the image pickup apparatus 101 may include the information processing apparatus 102 to realize the functions.

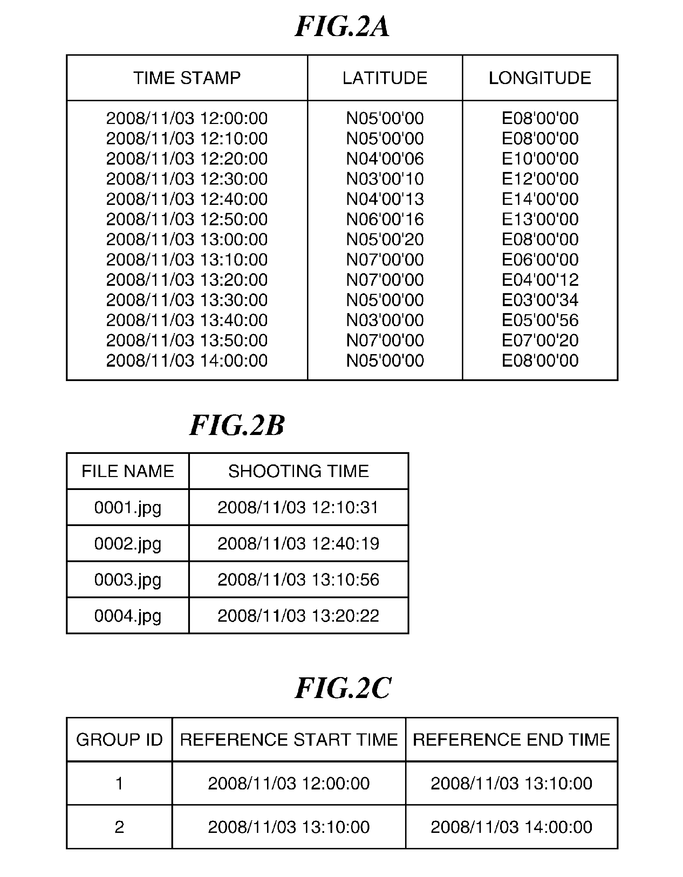

FIGS. 2A to 2C shows GPS information, image file attribute information, and group information which is determined based on the GPS information, respectively.

As shown in FIG. 2A, the GPS information as an example of positioning information includes latitude information and longitude information indicative of a location where the image pickup apparatus 101 was positioned (existed) and a time stamp (time information) indicative of a time point when the location was detected. The GPS information may further include other position information (e.g. altitude information) than latitude information and longitude information. Although in the present embodiment, GPS information is periodically recorded at time intervals of 10 minutes, the time interval is not limited to 10 minutes.

An image file includes not only image data obtained through conversion of an image signal obtained by shooting an object, but also shooting time information indicating, as attribute information, a time point at which the object was shot and file name information indicative of a file name, as shown in FIG. 2B. The image file has a JPEG format, for example.

As shown in FIG. 2C, the group information includes classification information (e.g. a group ID), reference start time information, and reference end time information. Group information items are stored in an external storage device 142, each as a record associating a pair of reference times, i.e. a reference start time and an reference end time with each other. In the present embodiment, each group is formed in association with a time period between a reference start time and a reference end time associated in one record. Although in the present embodiment, a group ID having a serial number is employed as classification information, this is not limitative, but there may be employed any other information with which each group can be uniquely identified. For example, when the attribute information of an image file contains information, such as a keyword, the keyword may be used as classification information. Further, when it is possible to acquire a place name from GPS information, the place name may be used. The calculation of a reference time will be described in detail hereinafter.

As shown in FIG. 1, the image pickup apparatus 101 comprises a controller 121, a GPS receiver 122, an image pickup section 123, an external storage device 124, a communication interface 125, a ROM 126, a RAM 127, an operation input interface 128, a display interface 129, and a system bus 130. In the figure, "interface" is abbreviated as "I/F".

The controller 121 is implemented e.g. by a CPU, and controls the overall operation of the image pickup apparatus 101. The GPS receiver 122 receives GPS information from GPS satellites periodically (at predetermined time intervals). The image pickup section 123 converts an image signal obtained by shooting an object to thereby generate an image file. The external storage device 124 is implemented e.g. by a hard disk or a memory card, and stores image files, GPS information, and so forth. The communication interface 125 controls connection of the image pickup apparatus 101 to the information processing apparatus 102 and other external apparatuses. The ROM 126 stores programs, parameters, and so forth which do not need changing. The RAM 127 temporarily stores programs, data, etc. supplied from external devices and the like. The operation input interface 128 controls connection of the image pickup apparatus 101 to an input device 131 such that an operation input by a user from the input device 131 is received to thereby input data to the image processing apparatus 101. The display interface 129 controls connection of the image pickup apparatus 101 to a display device 132 for displaying an image file and other data. The system bus 130 is a set of signal lines or the like which communicably connect between the units.

The information processing apparatus 102 comprises a controller 141, the external storage device 142, a communication interface 143, a ROM 144, a RAM 145, an operation input interface 146, a display interface 147, and a system bus 148.

The controller 141 is implemented e.g. by a CPU, and controls the overall operation of the information processing apparatus 102. The external storage device 142 is implemented e.g. by a hard disk or a memory card, and stores image files, GPS information, group information, results of various computation processes, an operating system, an image-classifying application program, and so forth. The communication interface 143 controls connection of the information processing apparatus 102 to the image pickup apparatus 101 and other external apparatuses. The ROM 144 stores programs, parameters, and so forth which do not need changing. The RAM 145 temporarily stores programs, data, etc. supplied from external devices and the like. The operation input interface 146 controls connection of the information processing apparatus 102 to an input device 149 such that an operation input by a user from the input device 149 is received to thereby input data to the image processing apparatus 102. The display interface 147 controls connection of the information processing apparatus 102 to a display device 150 for displaying an image file and other data. The system bus 148 is as a set of signal lines or the like which communicably connect between the units.

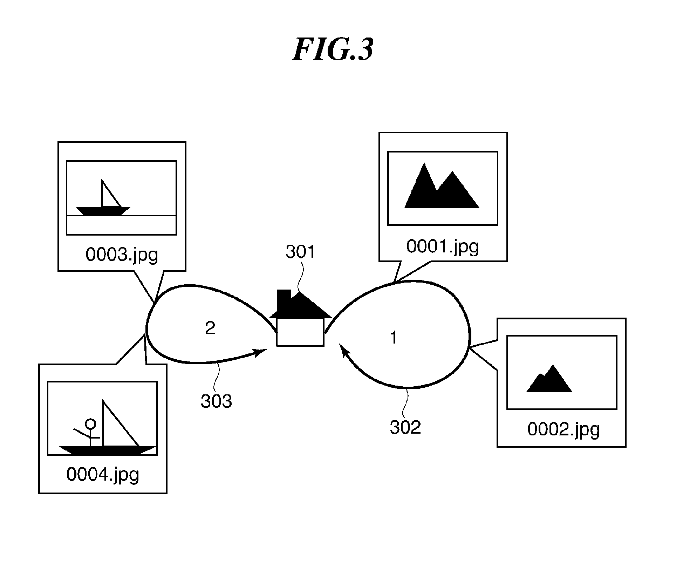

The outline of the present embodiment will be described with reference to FIG. 3. In the present embodiment, a description will be given of an exemplary case where groups are each formed in association with a route travelled by a user from a reference spot where the user starts with the image pickup apparatus 101, back to the reference spot, and image files generated by shooting on each of a plurality of routes are classified into a different one of the groups.

FIG. 3 illustrates an example of routes (travel routes) traveled by the user and image files. In FIG. 3, the user leaves his/her house as a reference spot 301 with the image pickup apparatus 101. First, the user travels along a route 302 illustrated therein, and returns to the reference spot 301. Further, the user travels along a route 303 illustrated therein. During travel, the user shoots objects using the image pickup apparatus 101 to thereby obtain the image files. Then, the image files are taken into the information processing apparatus 102 by a user instruction, and the information processing apparatus 102 classifies the captured image files.

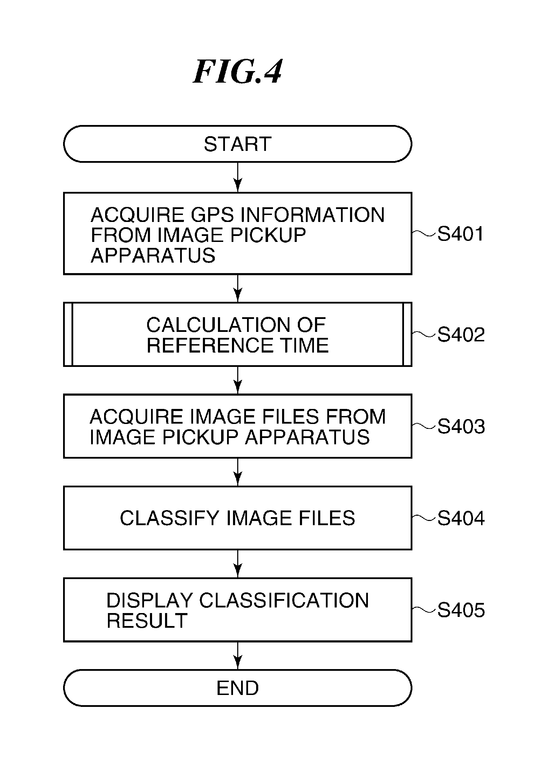

FIG. 4 is a flowchart of an image file-classifying process executed by the information processing apparatus 102, for classifying image files into groups. The controller 141 of the information processing apparatus 102 reads out and starts software, i.e. the operating system and the image-classifying application program from the external storage device 142, and the started software executes the image file-classifying process formed by steps described below.
In the present embodiment, the image file-classifying process executed by the software is described as executed by the information processing apparatus 102.

First in a step S401, upon connection of the image pickup apparatus 101 to the information processing apparatus 102, the information processing apparatus 102 acquires GPS information from the external storage device 124.

In a step S402, the information processing apparatus 102 calculates reference times of each group based on the GPS information, and stores the reference times in association with each classification information item (e.g. a group ID). The reference time calculation will be described hereinafter.

In a step S403, the information processing apparatus 102 having the image pickup apparatus 101 connected thereto, which is an example of an acquisition unit in the present invention, captures image files stored in the external storage device 124. In a step S404, the information processing apparatus 102 classifies the image files into groups based on shooting time information on the image files and the calculated reference times, and moves or copies the image files into folders associated with the respective group IDs.

More specifically, the information processing apparatus 102 determines a group to which an image file belongs, by determining which group has a reference start time and a reference end time between which exists shooting time indicated by the shooting time information associated with the image file. In the example shown in FIGS. 2B and 2C, shooting time information on a file "0001.jpg" is "2008/11/03 12:10:31". The shooting time information corresponds to a time period "2008/11/03 12:10:00 to 2008/11/03 13:10:00" associated with Group 1. Therefore, the file "0001.jpg" is classified into Group 1. Then, the file "0001.jpg" is stored in a folder created in association with Group 1.

In the present embodiment, a description is given of a configuration in which image files are moved or copied into folders provided for respective groups, thereby indicating a classification result. However, this is not limitative, but there may employed a configuration in which the identification information of a group to which each image file belongs is attached to the image file as attribute information, for example. Alternatively, there may employed, for example, a configuration in which each image file is stored and managed in association with the identification information of an associated group. This construction enables the information processing apparatus 102 to retrieve information on image files belonging to each group based on identification information associated with the image files, to thereby classify the image files.

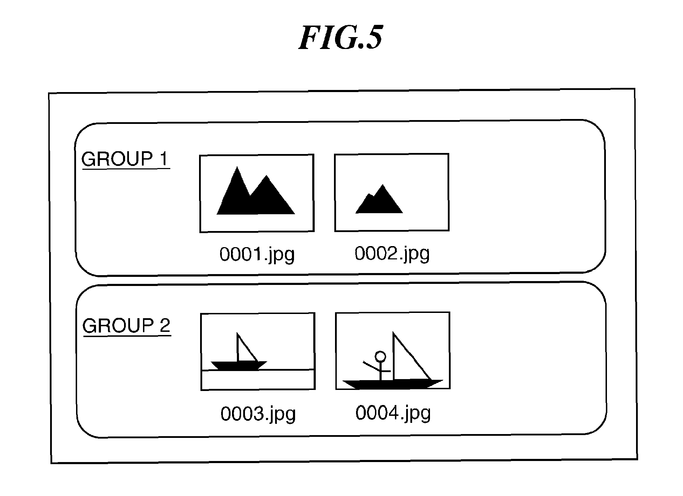

In a step S405, the information processing apparatus 102 outputs the result of image file classification to the display device 150 and causes the display device 150 to display the classification result. FIG. 5 illustrates an example of a display screen on which a classification result is displayed. On the display screen, the image files "0001.jpg" and "0002.jpg" in a first folder (e.g. Folder 1) in the external storage device 142 are displayed in a frame for Group 1, and the image files "0003.jpg" and "0004.jpg" in a second folder (e.g. Folder 2) in the external storage device 142 are displayed in a frame for Group 2.

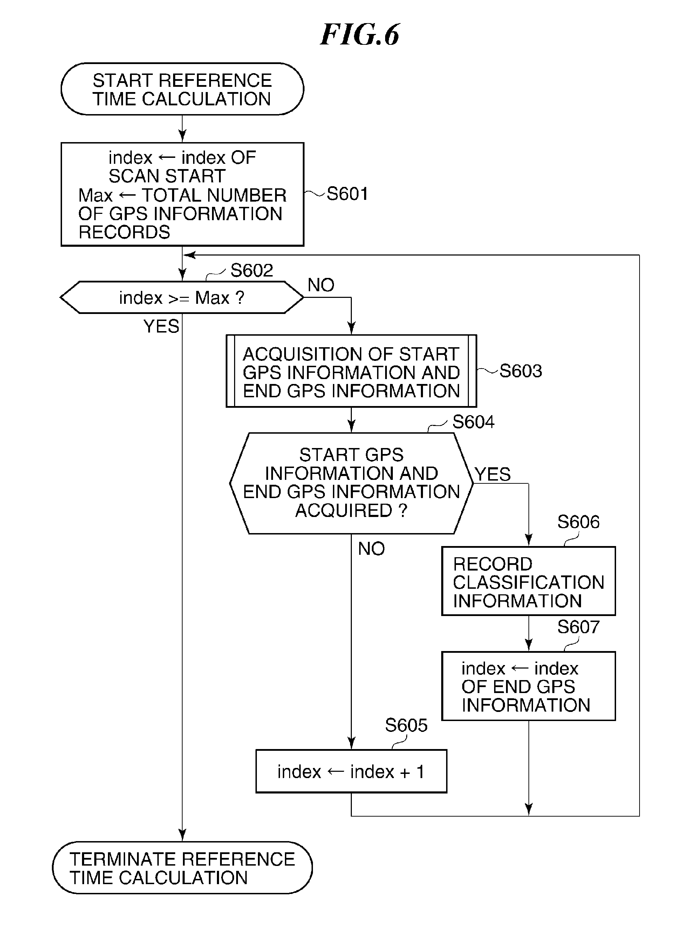

FIG. 6 is a flowchart of the reference time calculation process executed by the information processing apparatus 102 in the step S402 in FIG. 4.

First, in a step S601, the information processing apparatus 102 sets a variable "index" indicative of a GPS information record to be scanned to an initial value. Further, the information processing apparatus 102 sets a maximum value "Max" to the total number of GPS information records. In the present embodiment, scanning of the GPS information is started from a leading record, and therefore the variable "index" is set to 1. Further, in the present embodiment, the GPS information contains thirteen records as shown in FIG. 2A, and therefore the maximum value "Max" is set to "13".

In a step S602, the information processing apparatus 102 determines whether or not the GPS information record to be scanned is a last one. More specifically, it is determined whether or not the variable "index" is equal to or larger than the maximum value "Max". If the variable "index" is smaller than the maximum value "Max" (NO to the step S602), the information processing apparatus 102 executes a step S603. On the other hand, if the variable "index" is equal to or larger than the maximum value "Max" (YES to the step S602), the information processing apparatus 102 terminates the reference time calculation process.

In the step S603, the information processing apparatus 102 executes a group start-end GPS information-detecting process for acquiring GPS information (start GPS information) which serves as group start information and GPS information (end GPS information) which serves as group end information.
The group start-end GPS information-detecting process will be described hereinafter.

In a step S604, the information processing apparatus 102 determines whether or not the start GPS information and the end GPS information could be acquired in the step S603. If the acquisition is successful (YES to the step S604), the information processing apparatus 102 executes a step S606. On the other hand, if the acquisition is not successful (NO to the step S604), the information processing apparatus 102 executes a step S605. In the step S605, the information processing apparatus 102 increments the variable "index" by 1, and then returns to the step S602.

In the step S606, the information processing apparatus 102 records a reference start time and a reference end time in association with a classification information item. More specifically, the information processing apparatus 102 newly generates a classification information item (e.g. a group ID), illustrated in FIG. 2C, to thereby generate and store a record comprising the classification information item and the reference start time and the reference end time associated with the classification information. It should be noted that the information processing apparatus 102 records a serial number as the group ID, a time stamp of the start GPS information acquired in the step S603 as the reference start time, and a time stamp of the end GPS information acquired in the step S603 as the reference end time.

In a step S607, the information processing apparatus 102 sets the variable "index" to the index of the end GPS information obtained in the step S603, and returns to the step S602.

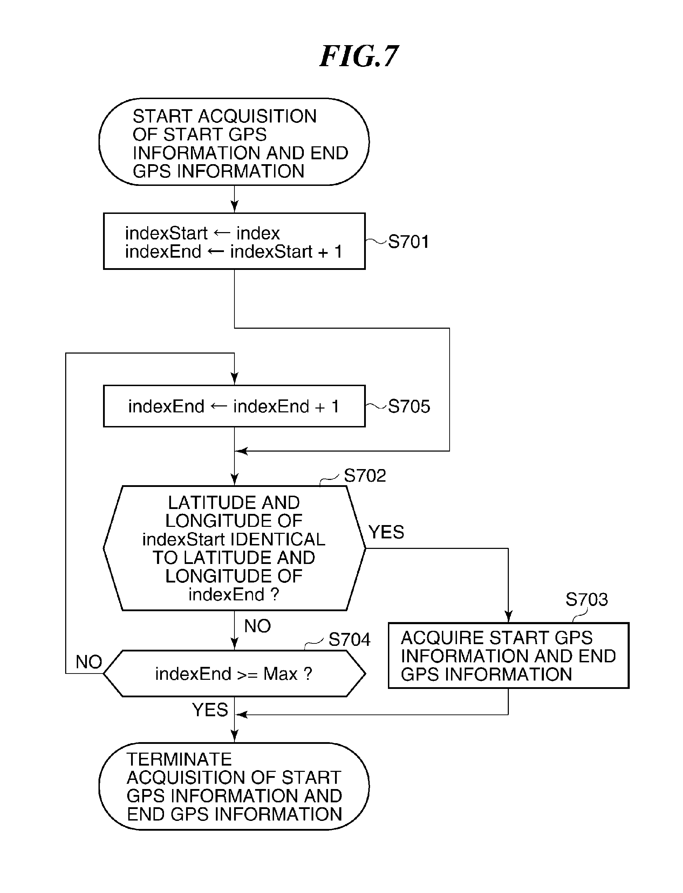

A description will be given of the group start-end GPS information-detecting process executed by the information processing apparatus 102 in the step S603 in FIG. 6 for acquisition of the start GPS information and the end GPS information, with reference to FIG. 7. FIG. 7 is a flowchart of the group start-end GPS information-detecting process in which the GPS information is scanned to detect a GPS information record having the same latitude information and longitude information as those of a GPS information record of interest, to thereby set a group.

In a step S701, the information processing apparatus 102 sets the variable "index" (variable for common use in the reference time calculation process) to a variable "indexStart" and a variable "indexEnd" to a value obtained by adding 1 to the variable "indexStart". The variable "indexstart" is a value for storing an index indicative of a candidate for start GPS information, and the variable "indexEnd" is a value for storing an index indicative of a candidate for end GPS information.

In a step S702, the information processing apparatus 102 determines whether or not the latitude information and longitude information of the GPS information record indicated by the variable "indexStart" match those of the GPS information record indicated by the variable "indexEnd". If the answer to the question of the step S702 is affirmative (YES), the information processing apparatus 102 executes a step S703.

On the other hand, if it is determined in the step S702 that the latitude information and longitude information of the GPS information record indicated by the variable "indexStart" do not match those of the GPS information record indicated by the variable "indexEnd", the information processing apparatus 102 executes a step S704. In the present embodiment, it is regarded, i.e. determined that the latitude information and longitude information (N05'00'20 and E08'00'00) of the GPS information record associated with indexEnd= "7" match the latitude information and longitude information (N05'00'00 and E08'00'00) of the GPS information record associated with the variable "indexStart".

In the step S703, the information processing apparatus 102 acquires the record of GPS information associated with the variable "indexStart", as start GPS information, and the record of GPS information associated with the variable "indexEnd", as end GPS information, followed by terminating the group start-end GPS information-detecting process.

In the step S704, the information processing apparatus 102 determines whether or not the GPS information has all been scanned, i.e. whether "indexEnd" is equal to or larger than "Max" (variable for common use in the reference time calculation process). If "indexEnd" is not smaller than "Max" (YES to the step S704), the information processing apparatus 102 terminates the group start-end GPS information-detecting process, whereas if "indexEnd" is smaller than "Max" (NO to the step S704), the information processing apparatus 102 proceeds to a step S705, wherein "indexEnd" is incremented by 1, and then returns to the step S704.

Thus, the information processing apparatus 102 acquires start GPS information and end GPS information defining each group in association with an occasion of one unit of "going-out".

In the present embodiment, in the determination performed in each of the steps S702 and S705 as to the match in latitude information and longitude information between records of GPS information, if the latitude information and longitude information of one record of GPS information and those of another record of GPS information are within a predetermined range, the two records of GPS information may be determined as matching each other. This makes it possible to determine an area within a predetermined range as the same location, and hence it is possible to prevent unnecessarily small groups from being formed.

Further, a method may be employed in which the information processing apparatus 102 stores items of place name information in association with items of latitude information and longitude information, and when an item of place name information associated with a record of GPS information and an item of place name information of another record of GPS information are identical to each other, it is determined in the steps S702 and S705 that the two records of GPS information match.

Furthermore, although in the present embodiment, GPS information is detected by the image pickup apparatus 101, a method may be employed in which GPS information is detected by an external device, such as a GPS unit separate from the image pickup apparatus 101, and the image pickup apparatus 101 acquires the detected GPS information from the external apparatus. What is more, although in the present embodiment, GPS information and image files are input to the information processing apparatus 102 from the image pickup apparatus 101, GPS information and image files may be acquired from an external medium, such as a memory card.

Although in the present embodiment, GPS information is used as position information, by way of example, other information than GPS information may be used. For example, position information which can be acquired through communication between an access point and a client server, such as by Wi-Fi, may be used.

Further, although in the present embodiment, the image file-classifying process and related processes are executed by the information processing apparatus 102, the image pickup apparatus 101 may execute the same. In this case, for example, the controller 121 carries out processing according to the procedure of the image-classifying application program stored e.g. in the external storage device 124, whereby the image file-classifying process and related processes are executed.

Although in the present embodiment, one unit of "going-out" is defined as a travel of from a start spot and back to the start spot, the method of determining the unit of "going-out" is not limited to this. For example, a method may be employed in which distances from respective travel spots to a start spot are calculated and arranged in a time-series fashion based on time information included in positioning information associated with each travel spot, and a travel spot at which the distance from the start spot changes from decreasing to increasing, is retrieved as end information.

As described above, according to the present embodiment, by analyzing user's travel routes based on GPS information, a travel from a certain spot and back to the same is determined as a unit of "going-out". Then, a start time and an end time of each travel are obtained, and image files are classified based on the obtained times and shooting times of the respective image files. Therefore, it is possible to realize sorting of the image files in units of "going-out" without burdening the user.

Next, a description will be given of an image management system incorporating an information processing apparatus as an image management apparatus according to a second embodiment of the present invention. The present image management system is basically identical in construction to the image management system described in the first embodiment.

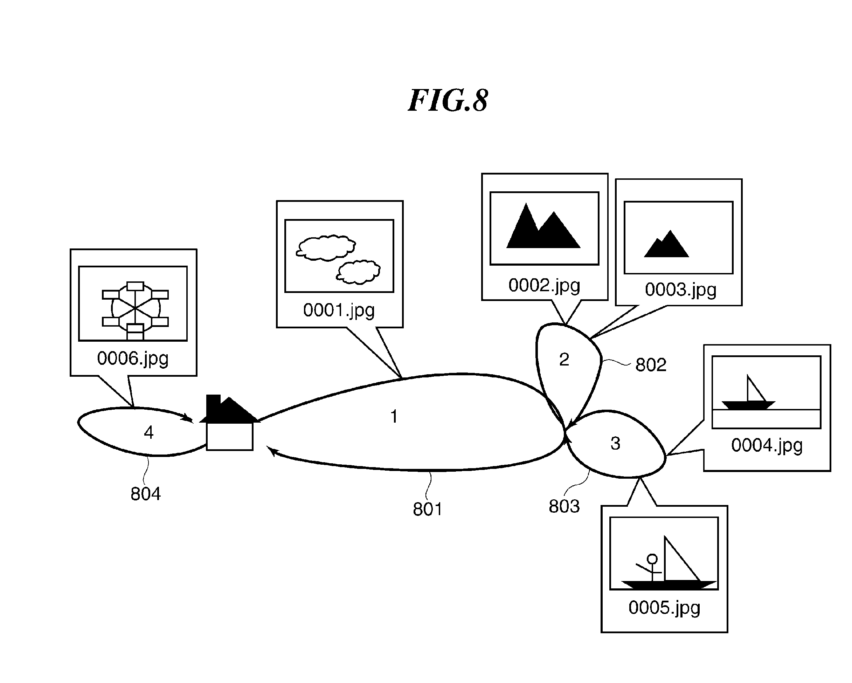

FIG. 8 illustrates examples of routes traveled by a user and image files. The user travels a route 801 (including a route 802 and a route 803) and a route 804 in the mentioned order and obtains image files on the routes. The present embodiment is basically the same as the first embodiment in that each group is determined in association with a route traveled by a user from a spot defined by arbitrary latitude and longitude information and back to the same spot. The second embodiment is distinguished from the first embodiment in that parent-child relationship between groups is taken into consideration and the groups are hierarchically represented. In the second embodiment, the routes 802 and 803 are regarded as children of the route 801. In the following, a description will be given of a method of classifying (sorting) the image files obtained on the routes 801 to 804.

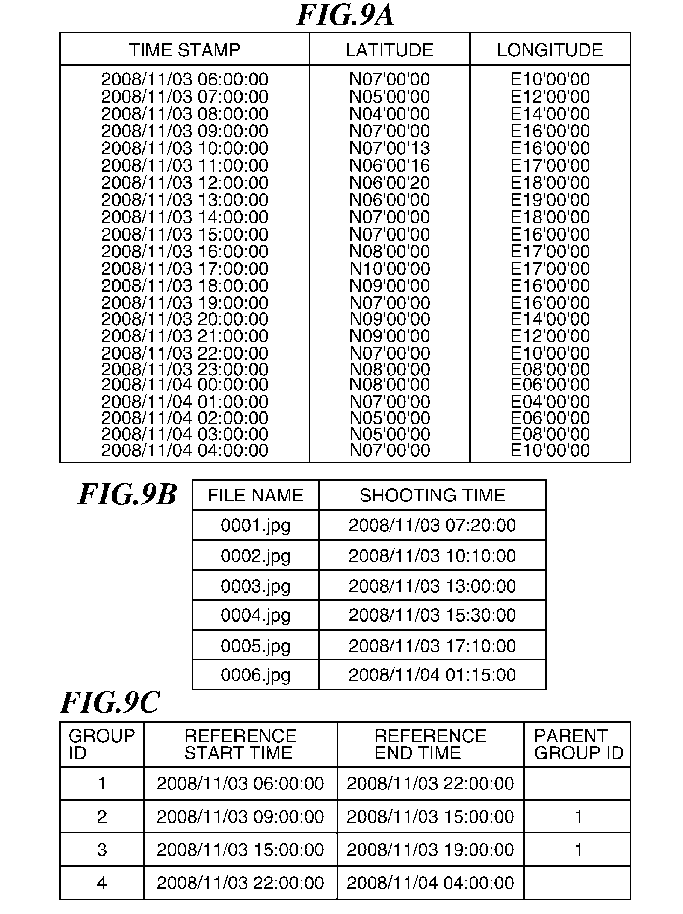

FIG. 9A shows an example of GPS information in the present embodiment. The GPS information is input to the information processing apparatus 102. The following description will be given assuming that the GPS information shown in FIG. 9A has been input to the information processing apparatus 102. Each record of GPS information is recorded at time intervals of one hour, for convenience of description, but this is not limitative. For example, the record of GPS information may be acquired at shorter time intervals than one hour. FIG. 9B shows an example of attribute information of image files in the present embodiment, which is also input to the information processing apparatus 102. In the following description, it is assumed that the attribute information of the image files shown in FIG. 9B has been input to the information processing apparatus 102. FIG. 9C shows an example of group information in the present embodiment.

An image file-classifying process executed by the information processing apparatus 102 will be described using the FIG. 4 flowchart, similarly to the image file-classifying process in the first embodiment. The image file-classifying process in the second embodiment is distinguished from that in the first embodiment in processing executed in each of the steps S402, S404, and S405. These steps in the present embodiment will be described below, and description of the other steps is omitted.

In the step S402, the information processing apparatus 102 calculates reference times based on the GPS information, and stores the calculated reference times in association with respective classification information items. As shown in FIG. 9C, each record of group information in the present embodiment includes a group ID, a reference start time, an reference end time, and a parent group ID as an identifier of a parent group. In the present embodiment, a group ID having a serial number is employed as classification information, this is not limitative, but there may be employed any other information with which each group can be uniquely identified. The calculation of reference times will be described hereinafter.

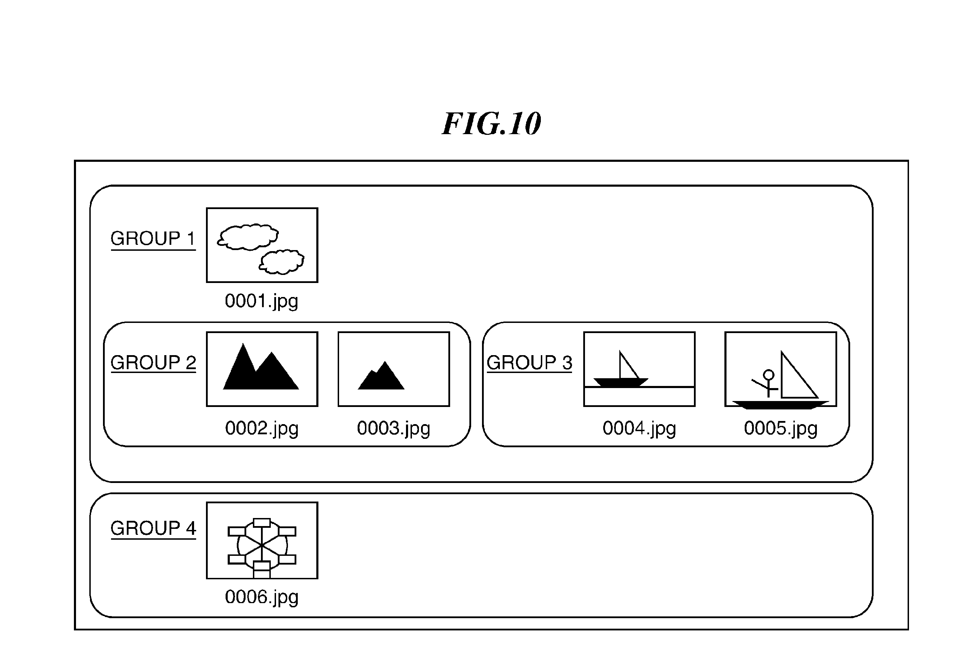

In the step S404, the information processing apparatus 102 classifies the acquired image files by moving or copying each of them into an associated one of folders formed for respective group IDs, based on the shooting time information of the image file and the reference times associated with the group IDs. It should be noted that the information processing apparatus 102 hierarchically generates folders for groups having a parent-child relationship. In the illustrated example, the information processing apparatus 102 registers Group 1 including Group 2 as a parent group, and for Group 2 included in Group 1, Folder 2 is generated in Folder 1 for Group 1 (see FIGS. 9C and 10, etc.).

Further, in the present embodiment, an image file can belong to a plurality of groups depending on shooting time information associated with the image file. In such a case, the groups have a parent-child relationship in which one group (parent group) includes another (child group), and the image file is classified into a child group on a priority basis. For example, in the case of Group 1 and Group 2, time "2008/11/03 10:10:00" indicated by a shooting time information item associated with an image file "0002.jpg" is between two time ranges defined reference start times and reference end times of the two groups, and the time range of Group 1 includes the time range of Group 2. Therefore, it is understood that Group 1 is a parent group of Group 2. No group has been registered as a child group of Group 2, and therefore the image file "0002.jpg" is determined as belonging to Group 2. Although in the present embodiment, there is employed a configuration in which image files are moved or copied into folders provided for respective groups, thereby indicating a classification result, this is not limitative, but there may employed a configuration in which the identification information of a group to which each image file belongs is attached to the image file as attribute information, for example. Alternatively, there may employed, for example, a configuration in which each image file is stored and managed in association with the identification information of an associated group. This construction enables the information processing apparatus 102 to retrieve information on image files belonging to each group based on identification information associated with the image files, to thereby classify the image files.

In the step S405, the information processing apparatus 102 outputs the result of the classification to the display device 150. FIG. 10 illustrates an example of a display screen. On the display screen, an image file "0001.jpg", a frame for Group 2, and a frame for Group 3, in a first folder (e.g. Folder 1) of the external storage device 142 are displayed within a frame for Group 1. Further, image files "0002.jpg" and "0003.jpg" in a second folder (e.g. Folder 2) are displayed within the frame for Group 2, and image files "0004.jpg" and "0005.jpg" in a third folder (e.g. Folder 3) are displayed within the frame for Group 3. Further, an image file "0006.jpg" in a fourth folder (e.g. Folder 4) is displayed within a frame for Group 4. The parent-child relationship between groups is expressed by displaying frames of child groups within a frame for a parent group.

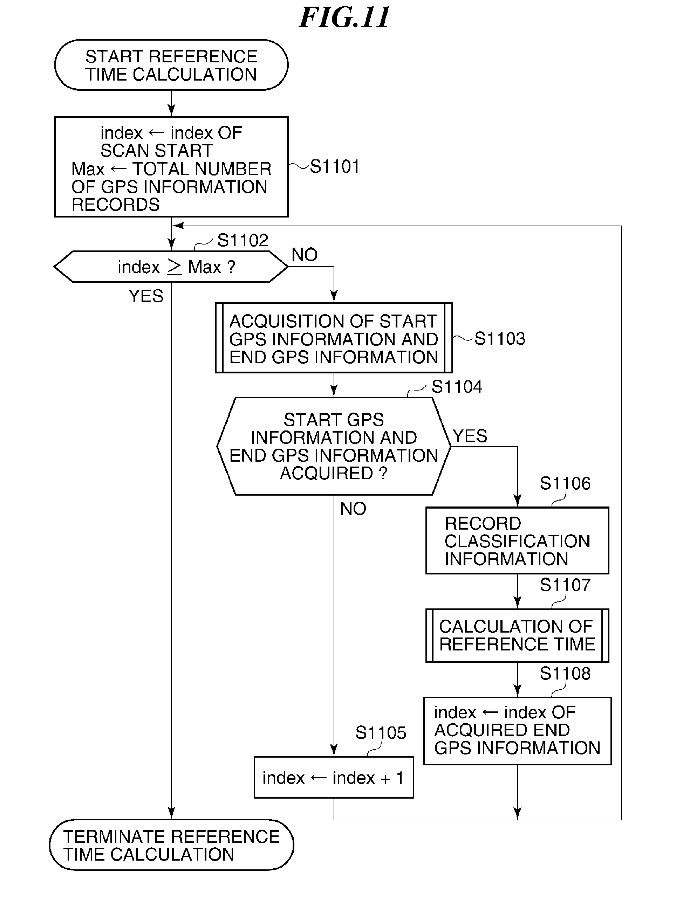

In the following, a detailed description will be given of the reference time calculation process.
The reference time calculation process executed in the step S402 in FIG. 4 will be described with reference to FIG. 11. FIG. 11 is a flowchart of the reference time calculation process executed by the information processing apparatus 102, for calculating the reference times of each group by scanning the GPS information from the leading item. Steps S1101 to 1105 and S1108
in FIG. 11 are the same as the steps S601 to S605 and S607 described as to the first embodiment with reference to FIG. 6, and therefore description thereof is omitted.

In a step S1106, the information processing apparatus 102 newly generates a classification information item (group ID) and records a reference start time, a reference end time, and a parent group ID in association with the classification information item. The information processing apparatus 102 records a serial number as the group ID, a time stamp of the start GPS information record obtained in the step S1103 as the reference start time, and a time stamp of the end GPS information record as the reference end time. As a parent group ID, there is recorded the group ID of a group which is determined to be a parent group. The value of a parent group ID is initially set to null.

In a step S1107, the information processing apparatus 102 executes a reference time calculation process by recursive call by scanning the GPS information from the start GPS information record to the end GPS information record, which was acquired in the step S1103. For example, in the step S1107, the information processing apparatus 102 executes the recursive process for calculating reference times by scanning the GPS information records belonging to Group 1. Then, when start GPS information and end GPS information of a child group can be obtained, the information processing apparatus 102 newly generates classification information and records a parent group ID as Group 1. This causes the reference times of the child group determined by the present recursive process to be within the range of the reference times of its parent group.

In the present embodiment, when a user travels from a specific location and back to the same along an identical route, a plurality of groups can be undesirably generated in a nested structure. In view of occurrence of such a case, groups may be deleted which have no image files classified i.e. grouped therein by the image file classification (S404).

As described above, according to the second embodiment, since image files can be hierarchically classified in units of occasions of going-out of the user, it is possible to classify the image files into a more finely-defined groups. Further, according to the second embodiment, a group having no image files classified therein can be deleted, which makes it possible to prevent groups from being wastefully subdivided.

Next, a description will be given of an image management system incorporating an image pickup apparatus as an image management apparatus according to a third embodiment of the present invention. This image management system is basically identical in construction to the image management system described in the first embodiment. However, in the present embodiment, the image pickup apparatus 101 classifies (groups) image files of images picked up during a travel starting from a reference spot and back to the reference spot, by classifying (grouping) the files of the picked-up images with reference to passing of the reference spot by the image pickup apparatus 101. The image pickup apparatus 101 executes a reference spot registration process for registering a reference spot by a user's button operation. After a first execution of the reference spot registration process, a reference spot passage determination program for executing a process for determining whether or not the image pickup apparatus 101 has passed the reference spot is always kept in operation in the image pickup apparatus 101. The image pickup apparatus 101 acquires position information via the GPS receiver 122 at time intervals of one minute (hereinafter referred to as "the predetermined time period") and determines whether or not the image pickup apparatus 101 has passed the reference spot. Although in the present embodiment, the predetermined time interval is set to one minute, it may be set to one second or any time period of which the value is set by the user.

In the image pickup apparatus 101, when a reference spot registration button displayed on the display device 132 is clicked via the operation input interface 128, if the reference spot passage determination program has not been started yet, the reference spot passage determination program is started first, causing the controller 121 (the reference spot passage determination program) to detect the click of the reference spot registration button (i.e. an instruction), whereas if the reference spot passage determination program has already been started, the controller 121 immediately detects the click of the reference spot registration button.

It should be noted that when a shutter as an example of the input device 131 is pressed, an image generation program is started. It is assumed that the image generation program is similar to those generally provided for image pickup apparatuses, and therefore description thereof is omitted in the present embodiment. In the image pickup apparatus 101, when storing an image file generated based on the image generation program in the external storage device 124, the controller 121 executes a picked-up image storage program. The controller 121 carries out processing following the programs (the reference spot passage determination program, the picked-up image storage program, etc.) stored e.g. in the external storage device 124, whereby the functions of the image pickup apparatus 101 and processes shown in respective flowcharts described hereinafter are realized. More specifically, the image pickup apparatus 101 reads out and starts software, i.e. each program from the external storage device 124, and the started software executes an associated one of the processes formed by steps described below. In the present embodiment, the processes executed by the software are described as executed by the information processing apparatus 102.

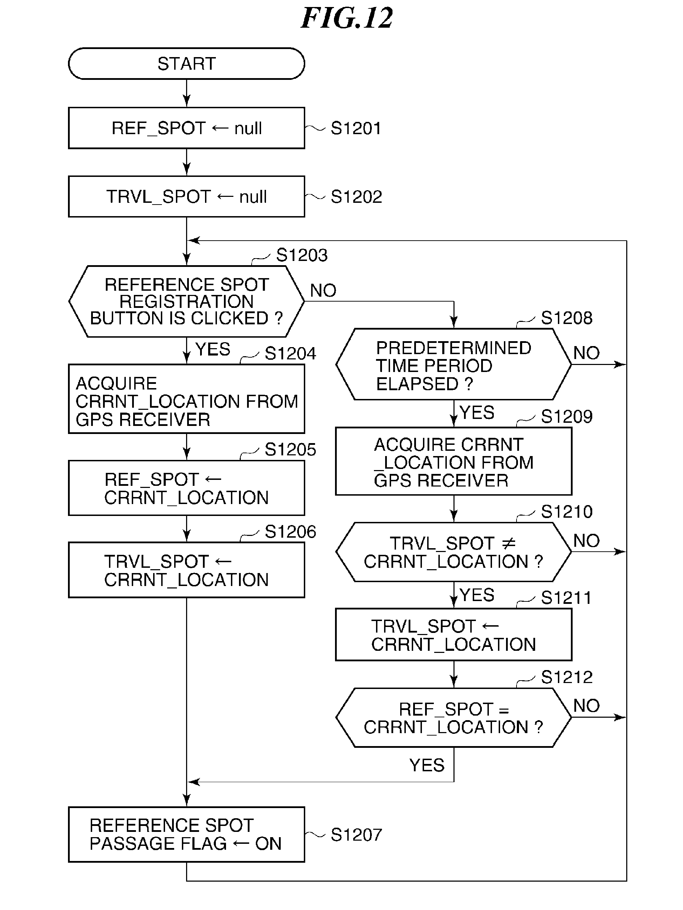

FIG. 12 is a flowchart of a reference spot passage determination process executed by the image pickup apparatus 101. In the FIG. 12 flowchart, a reference spot (a variable representative thereof in the flowchart is denoted as REF_SPOT") indicates a position information item as reference information (reference position information) with reference to which grouping is performed, and a travel spot (a variable representative thereof in the flowchart is denoted as TRVL_SPOT") represents a position information item indicative of a latest travel. A reference spot passage flag is set to "ON" when it is determined that a reference spot is passed. The reference spot passage flag is initially set to "OFF" before the start of the reference spot passage determination process.

First, the image pickup apparatus 101 sets the reference spot REF_SPOT to null (substitutes the latter into the former) (step S1201) and sets the travel spot TRVL_SPOT to null (step S1202). Then, the image pickup apparatus 101 determines whether or not the reference spot registration button is clicked (i.e. a registration operation has been performed) (step S1203) If the reference spot registration button is clicked (YES to the step S1203), the image pickup apparatus 101 acquires a current location (a variable representative thereof in the flowchart is denoted as CRRNT_LOCATION") as position information via the GPS receiver 122 (step S1204) and sets the reference spot REF_SPOT to the current location CRRNT_LOCATION (step S1205). Then, the image pickup apparatus 101 sets the travel spot TRVL_SPOT to the current location CRRNT_LOCATION (step S1206) and the reference spot passage flag to "ON" (S1207), and then returns to the step S1203, wherein the image pickup apparatus 101 determines whether or not the reference spot registration button is clicked.

On the other hand, if the reference spot registration button is not clicked (NO to the step S1203), the image pickup apparatus 101 determines whether or not a predetermined time period has elapsed (step S1208). If the predetermined time period has not elapsed (NO to the step S1208), the image pickup apparatus 101 returns to the step S1203, whereas if the predetermined time period has elapsed (YES to the step S1208), the image pickup apparatus 101 acquires the present position information via the GPS receiver 122 as the current location CRRNT_LOCATION (step S1209).

Then, the image pickup apparatus 101 determines whether or not the travel spot TRVL_SPOT is different from the current location CRRNT_LOCATION (step S1210). If the travel spot TRVL_SPOT is identical to the current location CRRNT_LOCATION (NO to the step S1210), the image pickup apparatus 101 returns to the step S1203, whereas if the travel spot TRVL_SPOT is different from the current location CRRNT_LOCATION (YES to the step S1210), the image pickup apparatus 101 sets the travel spot TRVL_SPOT to the current location CRRNT_LOCATION (step S1211).

Then, the image pickup apparatus 101 determines whether or not the reference spot REF_SPOT is identical to the current location CRRNT_LOCATION (step S1212). If the reference spot REF_SPOT is different from the current location CRRNT_LOCATION (NO to the step S1212), the image pickup apparatus 101 returns to the step S1203, whereas if the reference spot REF_SPOT is identical to the current location CRRNT_LOCATION (YES to the step S1212), the image pickup apparatus 101 sets the reference spot passage flag to "ON" (S1207), and then returns to the step S1203. If the reference spot registration button is clicked again here, the image pickup apparatus 101 determines in the step S1203 that the reference spot registration button is clicked, and performs registration of the reference spot and so forth, following the same procedure as described hereinabove.

As described above, in the reference spot passage determination process, the image pickup apparatus 101 is always kept in operation after the first execution of the process, and acquires position information via the GPS receiver 122 at time intervals of 1 minute. When the reference spot registration button is clicked during execution of the reference spot passage determination process, the image pickup apparatus 101 acquires position information via the GPS receiver 122 and holds the position information as the reference spot REF_SPOT.

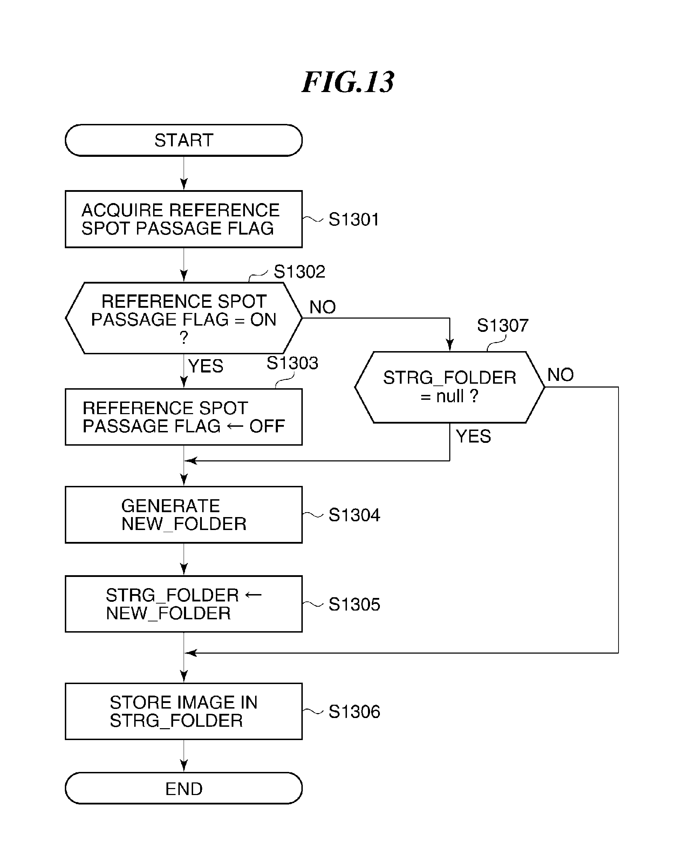

FIG. 13 is a flowchart of a picked-up image storage process executed by the image pickup apparatus 101. When the shutter is pressed by user operation, the picked-up image storage program is executed by the controller 121 so as to store a picked-up image in the external storage device 124.

A storage folder appearing in FIG. 13 represents the folder name of a folder for storing a picked-up image. The storage folder is initially set to null before the start of the present process. In the case of storing an image, "Folder + serial number" is assigned as a folder name to a newly generated folder.

First, the image pickup apparatus 101 acquires the reference spot passage flag (step S1301) and determines whether or not the reference spot passage flag is "ON" (step S1302). If the reference spot passage flag is "ON" (YES to the step S1302), the image pickup apparatus 101 sets the reference spot passage flag to "OFF" (step S1303), and then proceeds to a step S1304. On the other hand, if the reference spot passage flag is "OFF" (NO to the step S1302), the image pickup apparatus 101 determines whether or not the storage folder STRG_FOLDER is null (step S1307). If the storage folder STRG_FOLDER is null (YES to the step S1307), the process proceeds to the step S1304. On the other hand, if there is a folder set as the storage folder STRG_FOLDER (NO to the step S1307), the process proceeds to a step S1306, wherein the image pickup apparatus 101 stores an image in the existing folder.

In the step S1304, the image pickup apparatus 101 generates a new folder (a variable representative thereof in the flowchart is denoted as NEW_FOLDER") for storing the image, and sets the generated folder as the new folder NEW_FOLDER. "Folder + serial number" is assigned, as a folder name, to the newly generated folder (New Folder). Then, the image pickup apparatus 101 sets the storage folder to the new folder NEW_FOLDER (step S1305).

In the step S1306, the image pickup apparatus 101 stores the image in the storage folder, followed by terminating the present process.

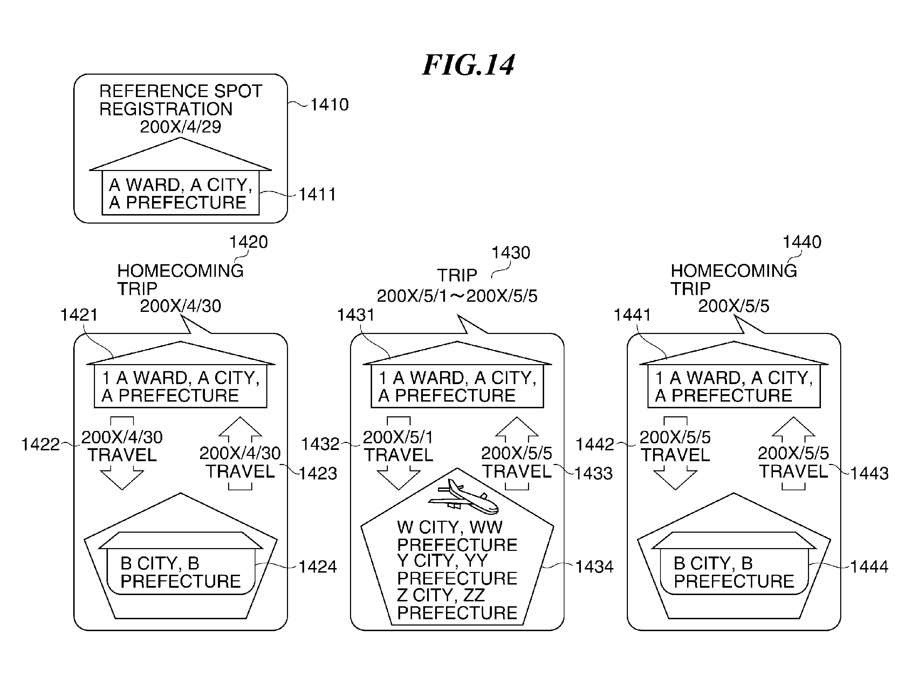

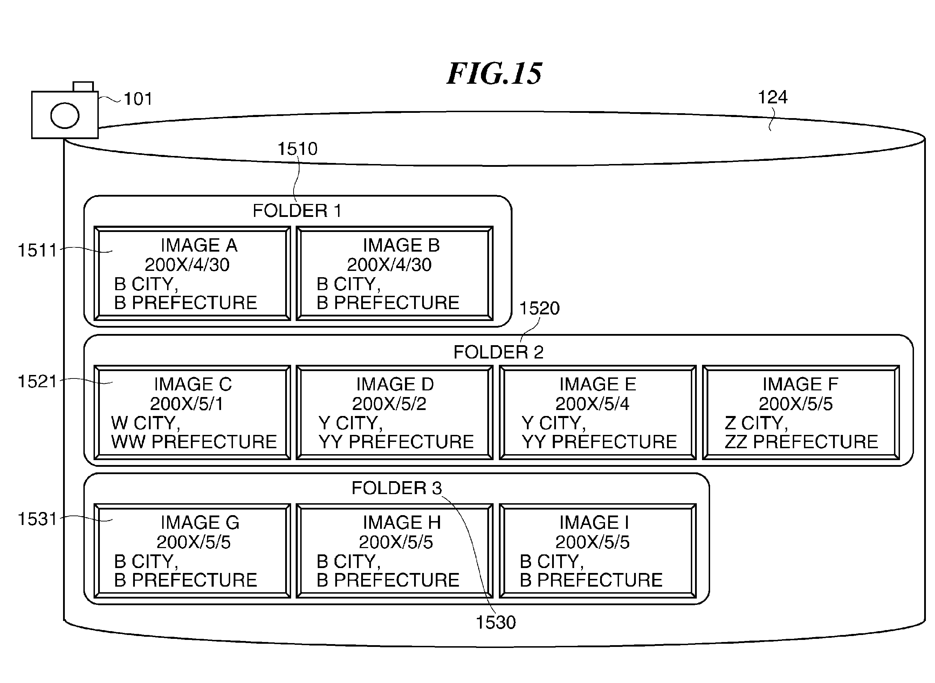

A grouping process will be described with reference to FIG. 14. FIG. 15 illustrates an example of a folder structure of folders that store images picked up at travel destinations exemplified in FIG. 14. It should be noted that reference information 1410 appearing in FIG. 14 is an example of a case where reference spot registration is performed at "1 A-ward,
A City, A Prefecture" (position information 1411). A description will be given, using FIG. 12 and 13 as required, of an exemplary case where after registration of the reference spot, the user travels in order of a homecoming trip shown in shooting information 1420, a trip shown in shooting information 1430, and a homecoming trip shown in shooting information 1440, and picked up images at travel destinations. Position information acquired via the GPS receiver 122 comprises latitude information and longitude information, but the description will be given using representation of addresses mapped onto maps, for simplicity of explanation.

First, the exemplary case where reference spot registration is performed at "1 A-ward, A City, A Prefecture" will be described with reference to the flowchart shown in FIG. 12. When it is determined in the step S1203 that the reference spot registration button is clicked, the image pickup apparatus 101 acquires the position information "1 A-ward, A City, A Prefecture" as the current location CRRNT_LOCATION via the CPS receiver 122 (step S1204) and sets the reference spot REF_SPOT to "1 A-ward, A City, A Prefecture" (step S1205). Then, the image pickup apparatus 101 sets the travel spot TRVL_SPOT to "1 A-ward, A City, A Prefecture" (step S1206) and sets the reference spot passage flag to "ON" (S1207). Thereafter, the image pickup apparatus 101 determines whether or not the reference spot registration button is clicked (step S1203).

Further, if the predetermined time period has elapsed (YES to the step S1208) without the reference spot registration button being clicked, the image pickup apparatus 101 sets the current location CRRNT_LOCATION to "1 A-ward, A City, A Prefecture" acquired via the GPS receiver 122 (step S1209). Then, the image pickup apparatus 101 determines that the travel spot TRVL_SPOT is identical to "1 A-ward, A City, A Prefecture" (NO to the step S1210), and determines whether or not the reference spot registration button is clicked (step S1203).

Next, the example of the homecoming trip shown in the shooting information 1420 will be described with reference to the flowchart shown in FIG. 12. In the case of the homecoming trip shown in the shooting information 1420, after registration of the reference spot, the user leaves "1 A-ward, A City, A Prefecture" (position information 1421) and travels to "B City, B Prefecture" (position information 1424) on "200X/4/30" (travel information 1422). In "B City, B Prefecture" (position information 1424) as a travel destination, the user performs shooting to pick up an image A and an image B. Thereafter, the user travels to "1 A-ward, A City, A Prefecture" (position information 1421) on "200X/4/30" (travel information 1423).

Now, a description will be given of an exemplary case where the user travels from "1 A-ward, A City, A Prefecture" (position information 1421) to "B City, B Prefecture" (position information 1424) on "200X/4/30" (travel information 1422) and then it is determined in the step S1208 in FIG. 12 that the predetermined time period has elapsed.

The image pickup apparatus 101 acquires the position information "B City, B Prefecture" via the GPS receiver 122 and sets the current location CRRNT_LOCATION to "B City, B Prefecture" (step S1209). Then, the image pickup apparatus 101 determines that the travel spot TRVL_SPOT "1 A-ward, A City, A Prefecture" and the current location CRRNT_LOCATION "B City, B Prefecture" are different from each other (YES to the step S1210). The image pickup apparatus 101 sets the travel spot TRVL_SPOT to "B City, B Prefecture" (step S1211) and determines whether or not the reference spot REF_SPOT "1 A-ward, A City, A Prefecture" is identical to the current location CRRNT_LOCATION "B City, B Prefecture" (step S1212). Since the reference spot REF_SPOT "1 A-ward, A City, A Prefecture" is different from the current location CRRNT_LOCATION "B City, B Prefecture" (NO to the step S1212), the image pickup apparatus 101 determines whether or not the reference spot registration button is clicked (step S1203). Whenever the predetermined time period elapses, the image pickup apparatus 101 continues to determine whether or not position information acquired via the GPS receiver 122 is different from the travel spot TRVL_SPOT "B City, B Prefecture".

Next, a description will be given, with reference to the flowchart in FIG. 13, of an exemplary case where shooting is performed to pick up the image A and the image B in "B City, B Prefecture" (position information 1424) and the image pickup apparatus 101 stores the image A and the image B in the external device 124. In the case of storing the image A, first, the image pickup apparatus 101 acquires the reference spot passage flag (step S1301). The reference spot passage flag has been "ON" since the registration of the reference spot was executed (YES to the step S1302), and therefore the image pickup apparatus 101 sets the reference spot passage flag to "OFF" (step S1303). Further, the image pickup apparatus 101 creates a folder assigned a folder name of "Folder 1" (step S1304). Then, the image pickup apparatus 101 sets the generated folder "Folder 1" as the storage folder (step S1305), and stores the image A in Folder 1 (step S1306), followed by terminating the present process.

In the case of storing the image B, the image pickup apparatus 101 acquires the reference spot passage flag (step S1301). Since the reference spot passage flag has been set to "OFF" (NO to the step S1302), the image pickup apparatus 101 determines if the storage folder STRG_FOLDER is null (step S1307). After determining that there is Folder 1 set as the storage folder STRG_FOLDER (NO to the step S1307), the image pickup apparatus 101 stores the image B in Folder 1 (step S1306), followed by terminating the present process.

A description will be given, with reference to the flowchart in FIG. 12, of an exemplary case where after performing shooting in "B City, B Prefecture" (position information 1424) as his/her home town, the user travels to "1 A-ward, A City, A Prefecture" (position information 1421) on "200X/4/30" (travel information 1423), as shown in the shooting information 1420. When the predetermined time period elapses after the user travels from "B City, B Prefecture" (position information 1424) to "1 A-ward, A City, A Prefecture" (position information 1421), it is determined that the answer to the question of the step S1208 is affirmative (YES).

The image pickup apparatus 101 acquires the position information "1 A-ward, A City, A Prefecture" via the GPS receiver 122 in the step S1209 and sets the current location CRRNT_LOCATION to "1 A-ward, A City, A Prefecture". Then, the image pickup apparatus 101 determines that the travel spot TRVL_SPOT "B City, B Prefecture" and the current location CRRNT_LOCATION "1 A-ward, A City, A Prefecture" are different from each other (YES to the step S1210). Further, the image pickup apparatus 101 sets the travel spot TRVL_SPOT to "1 A-ward, A City, A Prefecture" (step S1211) and checks whether or not the reference spot REF_SPOT is identical to the current location CRRNT_LOCATION "1 A-ward, A City, A Prefecture" (step S1212). In the present case, the image pickup apparatus 101 determines that the reference spot REF_SPOT "1 A-ward, A City, A Prefecture" is identical to the current location CRRNT_LOCATION "1 A-ward, A City, A Prefecture" (YES to the step S1212) and sets the reference spot passage flag to "ON" (S1207). Then, the image pickup apparatus 101 determines whether or not the reference spot registration button is clicked (step S1203). Whenever the predetermined time period elapses, the image pickup apparatus 101 continues to determine whether or not position information acquired via the GPS receiver 122 is different from the travel spot TRVL_SPOT "1 A-ward, A City, A Prefecture".

Next, the exemplary case of the trip shown in the shooting information 1430 will be described with reference to the flowchart in FIG. 12. In the present trip (shooting information 1430), the user travels from "1 A-ward, A City, A Prefecture" (position information 1431) to "W City, WW Prefecture", "Y City, YY Prefecture", and "Z City, ZZ Prefecture" (position information 1434) on "200X/5/1" (travel information 1432). Thereafter, the user travels to "1 A-ward, A City, A Prefecture" (position information 1431) on "200X/5/5" (travel information 1433).

In "W City, WW Prefecture", "Y City, YY Prefecture", and "Z City, ZZ Prefecture" (position information 1434) as travel destinations, the user performs shooting to pick up an image C, an image D, an image E, and an image F". A description will be given of an exemplary case where the user travels from "1 A-ward, A City, A Prefecture" (position information 1431) to "W City, WW Prefecture" (position information 1434) on "200X/5/1" (travel information 1432) and then it is determined in the step S1208 that the predetermined time period has elapsed.

The image pickup apparatus 101 acquires the position information "W City, WW Prefecture" via the GPS receiver 122 and sets the current location CRRNT_LOCATION to "W City, WW Prefecture" (step S1209). Then, the image pickup apparatus 101 determines that the travel spot TRVL_SPOT "1 A-ward, A City, A Prefecture" and the current location CRRNT_LOCATION "W City, WW Prefecture" are different from each other (YES to the step S1210), and sets the travel spot TRVL_SPOT to "W City, WW Prefecture" (step S1211). The image pickup apparatus 101 checks whether or not the reference spot REF_SPOT "1 A-ward, A City, A Prefecture" is identical to the current location CRRNT_LOCATION "W City, WW Prefecture" (step S1212). Since the reference spot REF_SPOT "1 A-ward, A City, A Prefecture" is different from the current location CRRNT_LOCATION "W City, WW Prefecture" (NO to the step S1212), the image pickup apparatus 101 determines whether or not the reference spot registration button is clicked (step S1203). Whenever the predetermined time period elapses, the image pickup apparatus 101 continues to determine whether or not the travel spot TRVL_SPOT and the current location CRRNT_LOCATION are different from each other.

Next, a description will be given, with reference to the flowchart in FIG. 13, of an exemplary case where shooting is performed to pick up the image C in "W City, WW Prefecture" (position information 1434). In the case of storing the image C, first, the image pickup apparatus 101 acquires the reference spot passage flag (step S1301). Since the reference spot passage flag has been set to "ON" after the homecoming trip shown in the shooting information 1420 (YES to the step S1302), the image pickup apparatus 101 sets the reference spot passage flag to "OFF" (step S1303), and then creates a folder assigned a folder name of Folder 2 (step S1304). Then, the image pickup apparatus 101 sets the storage folder STRG_FOLDER to the generated folder Folder 2 (step S1305), and stores the image C in Folder 2 (step S1306), followed by terminating the present process.

Next, a description will be given of an exemplary case where shooting is performed to pick up the image D and the image E in "Y City, YY Prefecture" (position information 1434). The image pickup apparatus 101 acquires the reference spot passage flag (step S1301) and checks whether or not the reference spot passage flag is "ON" (step S1302). Since the reference spot passage flag has been set to "OFF", the image pickup apparatus 101 determines if the storage folder STRG_FOLDER is null (step S1307). After determining that there is Folder 2 set as the storage folder STRG_FOLDER (NO to the step S1307), the image pickup apparatus 101 stores the image D and the image E in Folder 2 (step S1306), followed by terminating the present process. In a case where shooting is performed to pick up the image F" in "Z City, ZZ Prefecture" (position information 1434), the same processing as described above is executed. Thus, the image D, the image E, and the image F" are stored in Folder 2.

Next, a description will be given of an exemplary case where the user travels from "Z City, ZZ Prefecture" (position information 1434) on "200X/5/5" (travel information 1433) and returns to "1 A-ward, A City, A Prefecture" (position information 1431). Let it be assumed that it is determined that the predetermined time period has elapsed (YES to the step S1208) after the user moved from "Z City, ZZ Prefecture" (position information 1434) to "1 A-ward, A City, A Prefecture" (position information 1431) on "200X/5/5" (travel information 1433).

The image pickup apparatus 101 acquires the position information "1 A-ward, A City, A Prefecture" via the GPS receiver 122 (step S1209). The image pickup apparatus 101 determines that the travel spot TRVL_SPOT "Z City, ZZ Prefecture" (position information 1434) and the current location CRRNT_LOCATION "1 A-ward, A City, A Prefecture" are different from each other (YES to the step S1210). Further, the image pickup apparatus 101 sets the travel spot TRVL_SPOT to "1 A-ward, A City, A Prefecture" (step S1211) and checks whether or not the reference spot REF-SPOT is identical to the current location CRRNT_LOCATION "1 A-ward, A City, A Prefecture" (step S1212). Then, after determining that the reference spot REF_SPOT "1 A-ward, A City, A Prefecture" is identical to the current location CRRNT_LOCATION "1 A-ward, A City, A Prefecture" (YES to the step S1212), the image pickup apparatus 101 sets the reference spot passage flag to "ON" (S1207). Thereafter, the image pickup apparatus 101 determines whether or not the reference spot registration button is clicked (step S1203).

In the homecoming trip shown in shooting information 1440, the user travels from "1 A-ward, A City, A Prefecture" (position information 1441) to "B City, B Prefecture" (position information 1444) on "200X/5/5" (travel information 1442) after execution of the trip (shooting information 1430). Thereafter, the user travels to "1 A-ward, A City, A Prefecture" (position information 1441) on "200X/5/5" (travel information 1443).

In "B City, B Prefecture" (position information 1444) as a travel destination, the user performs shooting to pick up an image G, an image H, and an image I. Processing executed in this case is similar to that in the case of the homecoming trip (shooting information 1420), and therefore description with reference to the flowcharts in FIGS. 12 and 13 is omitted.

When the user executes reference spot registration and performs the homecoming trip (shooting information 1420), the trip (shooting information 1430), and the homecoming trip (shooting information 1440), the nine picked-up images A to I are stored in the folders forming a folder structure shown in FIG. 15.

FIG. 15 shows the folder structure formed when shooting is performed during the travel shown in FIG. 14, in the order described hereafter:
(1) Shooting is performed to pick up the image A and the image B in "B City, B Prefecture" (position information 1424) during the homecoming trip (shooting information 1420).
(2) Shooting is performed to pick up the image C in "W City, WW Prefecture" (position information 1434) during the trip (shooting information 1430).
(3) Shooting is performed to pick up the image D and the image E in "Y City, YY Prefecture" (position information 1434) during the trip (shooting information 1430).
(4) Shooting is performed to pick up the image F" in "Z City, ZZ Prefecture" (position information 1434) during the trip (shooting information 1430).
(5) Shooting is performed to pick up the image G, image H, and the image I in "B City, B Prefecture" (position information 1444) during the homecoming trip (shooting information 1440).

FIG. 15 is a diagram illustrating an example of the folder structure in the external storage device 124 of the image pickup apparatus 101. A folder 1510 corresponds to the folder generated in the case (1), and images 1511 correspond to the images stored in the case (1). A folder 1520 corresponds to the folder generated in the cases (2), and images 1521 correspond to the images stored in the case (2), (3), and (4). A folder 1530 corresponds to the folder generated in the case (5), and images 1531 correspond to the images stored in the case (5).

As described above, according to the present embodiment, images picked up during a time period from departure from a reference spot to return to the reference spot are grouped into one group, which facilitates grouping of images on a "going-out" occasion basis. Further, images picked up during each travel are classified into one group, which facilitates grouping of images on a "going-out" occasion basis.

Although in the present embodiment, the reference spot passage flag is used for determination as to whether or not a reference spot has been passed, a position information list may be generated and used to determine whether or not a reference spot was passed during a time period from an immediately preceding shooting to a current time point. It is also possible to use access history at a reference spot for determination as to the passage.

Further, in the present embodiment, grouping is performed by dividing a folder, but group information may be attached to each file name so as to perform grouping. Alternatively, common metadata may be registered in association with each group. Further, the grouping of picked-up images can be realized by creating a separate file in which how the images are grouped is set forth.

Although in the present embodiment, the GPS receiver 122 is used as means for acquiring position information, position information may be acquired from an access point on a wireless LAN or a network via the communication interface 125. Alternatively, there may be employed a configuration in which metadata indicative of position information is attached to an image and the position information is acquired from the metadata.

Further, although in the present embodiment, the reference spot registration button is used as means for registering a reference spot and reference spot registration is performed by the user operating the button, position information indicative of a reference spot may be acquired from an external apparatus, such as a PC, upon connection of the image pickup apparatus 101 to the external apparatus. Alternatively, there may be employed a configuration in which when an image is picked up by a shooting operation performed at a reference spot, metadata indicative of position information (shooting location information) on the shooting location is caused to be attached to the image, thereby enabling the position information to be acquired from the image. Further, although in the present embodiment, only one reference spot is set as a reference for grouping, a plurality of reference spots may be set for grouping.

Next, a description will be given of an image management system including an information processing apparatus as an image management apparatus according to a fourth embodiment of the present invention. The present image management system is basically identical in construction to the image management system described in the first embodiment. The information processing apparatus 102 as the image management apparatus according to the present embodiment groups a plurality of images. The information processing apparatus 102 displays a list of reduced images of respective images within a designated folder at the start of the information processing apparatus 102. Each image has shooting-related position information recorded therein, and the position information is acquired from an image selected by user operation and is registered as a reference spot. The information processing apparatus 102 groups images in the designated folder with reference to the image having the position information thereof registered as the reference spot. The information processing apparatus 102 is configured to have a function of capturing images. In the present embodiment, the information processing apparatus 102 is configured to capture images recorded in a storage medium, such as a DVD or a memory card, and group the images with reference to an image having position information thereof registered as a reference spot. Although in the present embodiment, images picked up by an image pickup apparatus are captured via a storage medium, such as a DVD or a memory card, images downloaded via a network may be grouped.

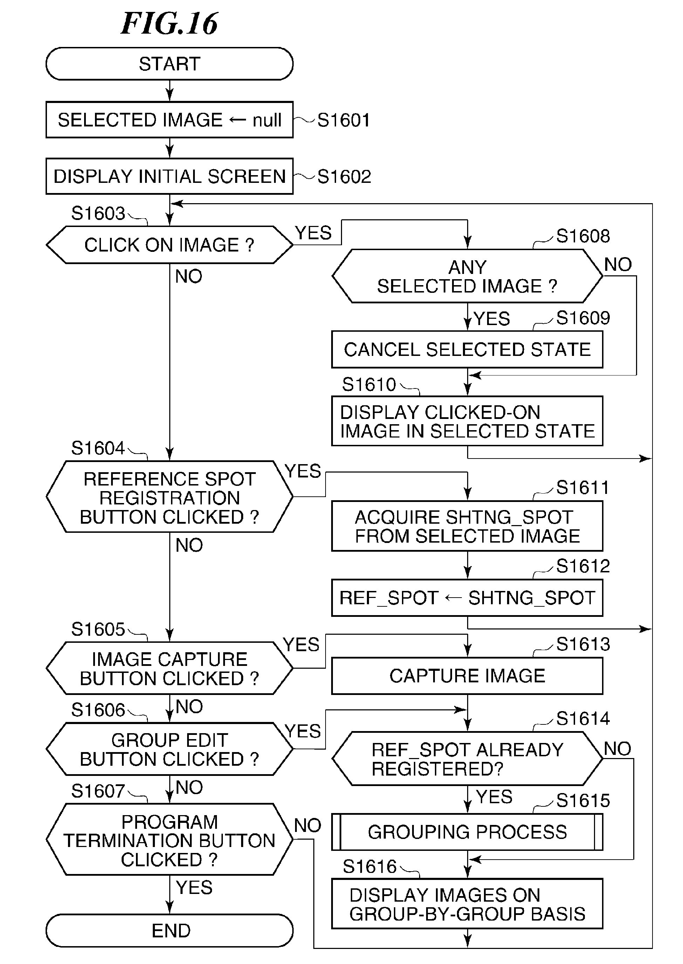

FIG. 16 is a flowchart of an image file-classifying process executed by the controller 141 of the information processing apparatus 102. In the present embodiment, the controller 141 carries out processing according to the procedure of a program stored in the external storage device 142, whereby functions of the information processing apparatus 102 and the image file-classifying process described hereinafter are realized.

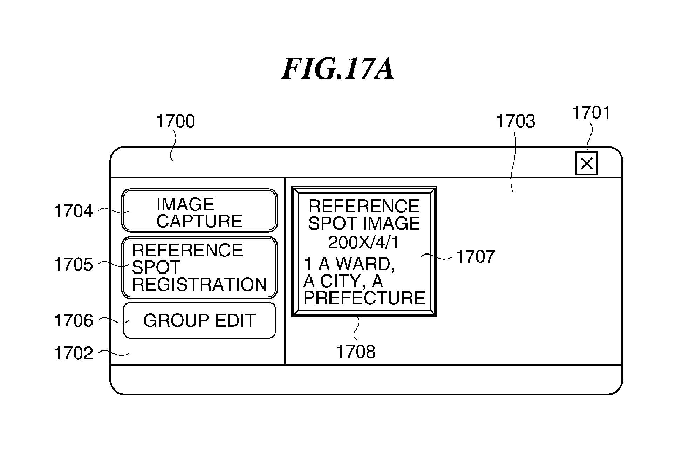

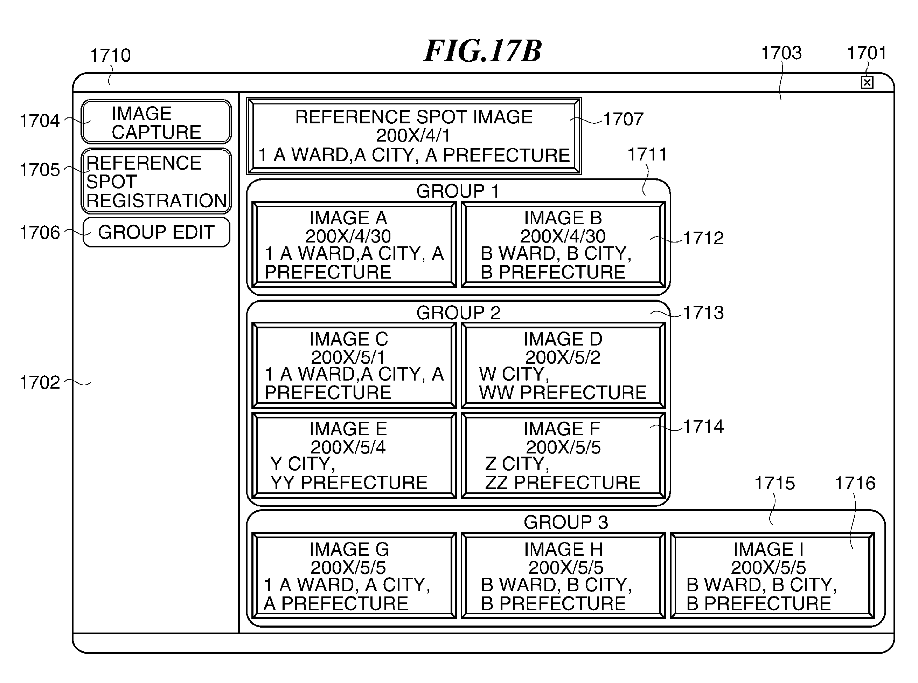

The reference spot REF_SPOT holds the position information on a reference spot. Before the start of the present process, the reference spot REF_SPOT is set to null. The image file-classifying process of the present embodiment is executed with a folder path where images exist at the start of the information processing apparatus 102, as an argument. In the present embodiment, a description will be given of an exemplary case where a screen (user interface screen), shown in FIG. 17A, for user input is switched to a user interface screen shown in FIG. 17B.

First, the information processing apparatus 102 sets a selected image to null (step S1601), displays an initial screen (image selection screen) 1700 shown in FIG. 17A on the display device 150 (step S1602), and then awaits a user input.

The initial screen 1700 shown in FIG. 17A includes a program termination button 1701, a menu button display area 1702, and an image list display area 1703. The menu button display area 1702 includes an image capture button 1704, a reference spot registration button 1705, and a group edit button 1706. The image list display area 1703 includes reduced images 1707 existing in a designated folder. The currently selected reduced image 1707 is displayed with an image selection frame 1708.

After displaying the initial screen 1700 shown in FIG. 17A, the information processing apparatus 102 determines whether or not any of the reduced images 1707 currently displayed in the image list display area 1703 is clicked (step S1603). If one of the reduced images 1707 is clicked (YES to the step S1603), the information processing apparatus 102 determines whether or not there is a selected image (whether or not an image in the selected state exists) (step S1608). If there is no selected image (NO to the step S1608), the information processing apparatus 102 executes a step S1610. On the other hand, if there is a selected image (YES to the step S1608), the information processing apparatus 102 erases the image selection frame 1708 to cancel the selected state (step S1609), and then executes the step S1610.

In the step S1610, the information processing apparatus 102 displays the clicked-on reduced image 1707 with the image selection frame 1708, thereby placing the reduced image 1707 in the selected state, and then awaits user input.

In a step S1604, the information processing apparatus 102 determines whether or not the reference spot registration button 1705 is clicked (i.e. whether or not registration operation has been performed) when a user input is awaited after displaying the initial screen 1700. If the reference spot registration button 1705 is not clicked (NO to the step S1604), the information processing apparatus 102 executes a step S1605. On the other hand, if the reference spot registration button 1705 is clicked (YES to the step S1604), the information processing apparatus 102 acquires shooting position information from the selected image and sets a shooting spot (a variable representative thereof in the flowchart is denoted as "SHTNG_SPOT") to the position information (step S1611). Then, the information processing apparatus 102 sets the set shooting spot SHTNG_SPOT to the reference spot REF_SPOT(step S1612), and awaits a user input. It should be noted that the reference spot REF_SPOT is maintained even after termination of a grouping process described hereinafter.

In the step S1605, the information processing apparatus 102 determines whether or not the image capture button 1704 is clicked when a user input is awaited after displaying the initial screen 1700. If the image capture button 1704 is not clicked (NO to the step S1605), the information processing apparatus 102 executes a step S1606. On the other hand, if the image capture button 1704 is clicked (YES to the step S1605), the information processing apparatus 102 captures all images stored in the external storage device 142 (step S1613), and awaits a user input. It is assumed that the captured images are arranged in order of shooting date and time (time sequence), and each of the images has shooting position information recorded therein.

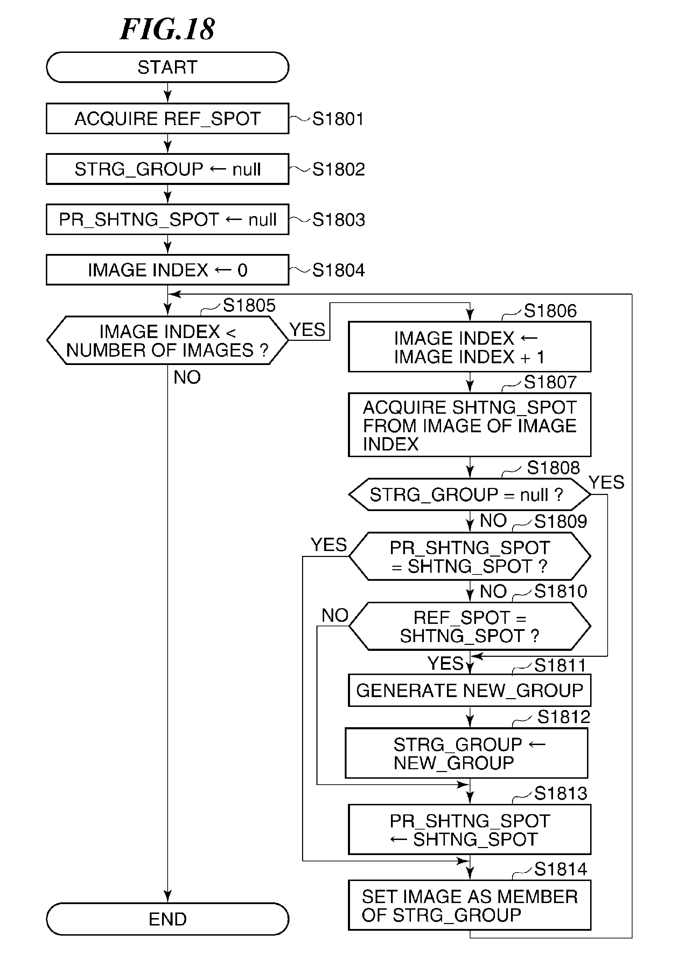

In the step S1606, the information processing apparatus 102 determines whether or not the group edit button 1706 is clicked when a user input is awaited after displaying the initial screen 1700. If the group edit button 1706 is not clicked (NO to the step S1606), the information processing apparatus 102 executes a step S1607. On the other hand, if the group edit button 1706 is clicked (YES to the step S1606), the information processing apparatus 102 executes a step S1614. In the step S1614, the information processing apparatus 102 determines whether or not a reference spot has already been registered (the reference spot REF_SPOT has been set). If no reference spot has been registered yet (NO to the step S1614), the information processing apparatus 102 executes a step S1616. On the other hand, if a reference spot has already been registered (YES to the step S1614), the information processing apparatus 102 executes a grouping process described hereinafter with reference to FIG. 18 (step S1615). Thereafter, the information processing apparatus 102 executes the step S1616.

In the step S1616, the information processing apparatus 102 displays all the captured images on a group basis, and awaits a user input. It should be noted that when no reference spot has been registered yet (NO to the step S1614), the information processing apparatus 102 displays all the captured images as a single group.

In the step S1607, the information processing apparatus 102 determines whether or not the program termination button 1701 is clicked when a user input is awaited after displaying the initial screen 1700. If the program termination button 1701 is clicked (YES to the step S1607), the information processing apparatus 102 terminates the present process. On the other hand, if the program termination button 1701 is not clicked (NO to the step S1607), the information processing apparatus 102 awaits a user input.

FIG. 18 is a flowchart of the grouping process executed in the step S1615.

First, the information processing apparatus 102 acquires the reference spot REF_SPOT (step S1801). Then, the information processing apparatus 102 sets a stored group (a variable representative thereof in the flowchart is denoted as "STRD_GROUP") to null (step S1802), a preceding image shooting spot (a variable representative thereof in the flowchart is denoted as "PR_SHTNG_SPOT") to null (step S1803), and an image index to 0 (step S1804).

Next, the information processing apparatus 102 compares the image index with the number of images (step S1805). If the image index is equal to or larger than the number of images (NO to the step S1805), the information processing apparatus 102 terminates the present process, and executes the step S1616 in FIG. 17. On the other hand, if the image index is smaller than the number of images (YES to the step S1805), the information processing apparatus 102 increments the image index by 1 (step S1806). Then, the information processing apparatus 102 acquires shooting position information from an image associated with the image index and sets the acquired position information as the shooting spot SHTNG_SPOT (step S1807).

Then, the information processing apparatus 102 determines whether or not the stored group STRD_GROUP is null (step S1808). If the stored group STRD_GROUP is null (YES to the step S1808), the information processing apparatus 102 executes a step S1811. On the other hand, if the stored group STRD_GROUP is set (NO to the step S1808), the information processing apparatus 102 determines whether or not the preceding image shooting spot PR_SHTNG_SPOT and the shooting spot SHTNG_SPOT are identical to each other (step S1809). If the preceding image shooting spot PR_SHTNG_SPOT and the shooting spot SHTNG_SPOT are identical to each other (YES to the step S1809), the information processing apparatus 102 executes a step S1814. On the other hand, if the preceding image shooting spot PR_SHTNG_SPOT and the shooting spot SHTNG_SPOT are different from each other (NO to the step S1809), the information processing apparatus 102 determines whether or not the reference spot REF_SPOT and the shooting spot SHTNG_SPOT are identical to each other (step S1810). If the reference spot REF_SPOT and the shooting spot SHTNG_SPOT are different from each other (NO to the step S1810), the information processing apparatus 102 executes a step S1813. On the other hand, if the reference spot REF_SPOT and the shooting spot SHTNG_SPOT are identical to each other (YES to the step S1810), the information processing apparatus 102 executes the step S1811.

In the step S1811, the information processing apparatus 102 newly generates an image group. The generated group is assigned a group name of "Group + serial number". Then, the information processing apparatus 102 sets the generated group as a new group (a variable representative thereof in the flowchart is denoted as "NEW_GROUP", sets the stored group STRD_GROUP to the new group NEW_GROUP (step S1812), and then executes the step S1813.

In the step S1813, the information processing apparatus 102 sets the preceding image shooting spot PR_SHTNG_SPOT to the shooting spot SHTNG_SPOT. In the step S1814, the information processing apparatus 102 sets the image associated with the image index as a member of the stored group, and then executes the step S1805.

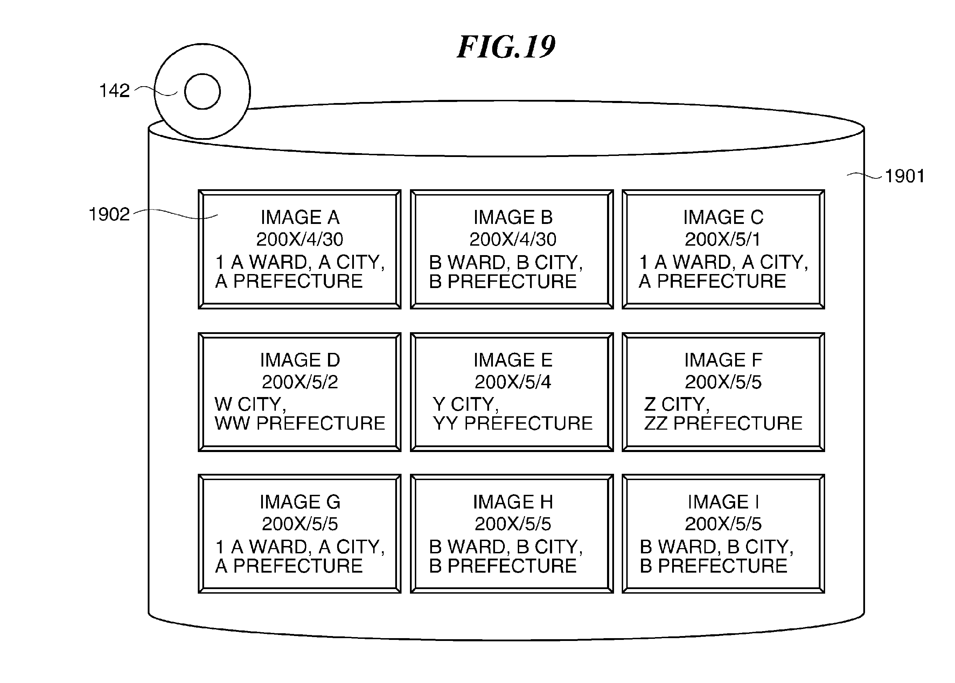

A description will be given, with reference to FIG. 16, of an exemplary case where the reference spot registration button 1705 and the image capture button 1704 are clicked in the mentioned order on the initial screen 1700 in FIG. 17A in a state where the reduced image 1707 has been selected. In the present embodiment, images captured by clicking on the image capture button 1704 correspond to images 1902, shown in FIG. 19, stored in the external storage device 142.
The external storage device 142 includes an image storage folder 1901 and the images 1902 stored in the folder 1901. Each image 1902 holds date and time information indicative of a date and time when shooting was performed and position information indicative of a shooting spot. In the image storage folder 1901, there are stored nine images.

When the reference spot registration button 1705 is clicked when a user input is awaited (YES to the step S1604), the information processing apparatus 102 acquires "1 A-ward, A City, A Prefecture" from the selected reduced image 1707 as position information (step S1611). Then, the information processing apparatus 102 sets the reference spot REF_SPOT to "1 A-ward, A City, A Prefecture" (step S1612), and then a user input is awaited.

Then, if the image capture button 1704 is clicked after registration of the reference spot, the information processing apparatus 102 determines that the answer to the question of the step S1605 is affirmative (YES), and captures all the images (nine in the present example) (step S1613). Since the reference spot REF_SPOT has been set to "1 A-ward, A City, A Prefecture", the information processing apparatus 102 determines that the answer to the question of the step S1614 is affirmative (YES), and executes the grouping process (step S1615).

Next, the grouping process will be described with reference to FIG. 18. In the step S1801, the information processing apparatus 102 acquires "1 A-ward, A City, A Prefecture" as the reference spot REF_SPOT. Then, the information processing apparatus 102 sets the stored group STRD_GROUP to null (step S1802) and the preceding image shooting spot PR_SHTNG_SPOT to null (step S1803), and initializes the image index to 0 (step S1804). Through comparison between the image index = 0 and the number of images = 9, it is determined that the number of images is larger than the image index (YES to the step S1805), and therefore the information processing apparatus 102 increments the image index by 1 (step S1806). Then, the information processing apparatus 102 acquires the position information "1 A-ward, A City, A Prefecture" from an image A associated with the image index of 1 and sets the acquired position information as a shooting spot SHTNG_SPOT (step S1807). Since the stored group STRD_GROUPhas been set to null (YES to the step S1808), the information processing apparatus 102 newly generates Group 1 (step S1811) and sets the stored group STRD_GROUPto Group 1 (step S1812). Then, the information processing apparatus 102 sets the preceding image shooting spot PR_SHTNG_SPOT to "1 A-ward, A City, A Prefecture" acquired in the step S1807 (step S1813) and sets the image A as a member of the stored group STRD_GROUPof Group 1 (step S1814).

Next, the information processing apparatus 102 performs comparison between the image index and the number of images (step S1805). Through comparison between the image index = 1 and the number of images = 9, the information processing apparatus 102 determines that the number of images is larger than the image index (YES to the step S1805), and increments the image index by 1 to set the image index to 2 (step S1806). Then, the information processing apparatus 102 acquires position information "B City, B Prefecture" from an image B associated with the image index of 2 and sets the acquired position information as a shooting spot SHTNG_SPOT (step S1807). Since the stored group STRD_GROUPhas been set to Group 1 (NO to the step S1808), the information processing apparatus 102 performs comparison between the preceding image shooting spot PR_SHTNG_SPOT and the shooting spot SHTNG_SPOT (step S1809). In this case, the preceding image shooting spot PR-SHTNG-SPOT "1 A-ward, A City, A Prefecture" and the shooting spot SHTNG_SPOT "B City, B Prefecture" acquired in the step S1807 are different from each other (NO to the step S1809), and therefore the information processing apparatus 102 performs comparison between the reference spot REF_SPOT and the shooting spot SHTNG_SPOT acquired in the step S1807 (step S1810). Further, since the reference spot REF_SPOT "1 A-ward, A City, A Prefecture" and the shooting spot SHTNG_SPOT "B City, B Prefecture" are different from each other (NO to the step S1810), the information processing apparatus 102 sets the preceding image shooting spot PR_SHTNG_SPOT to "B City, B Prefecture" (step S1813) and then sets the image B as a member of the stored group STRD_GROUPof Group 1 (step S1814).

Next, the information processing apparatus 102 performs comparison between the image index and the number of images (step S1805). Through comparison between the image index = 2 and the number of images = 9, the information processing apparatus 102 determines that the number of images is larger than the image index (YES to the step S1805), and increments the image index by 1 to set the image index to 3 (step S1806). Then, the information processing apparatus 102 acquires position information "1 A-ward, A City, A Prefecture" from an image C associated with the image index of 3 and sets the acquired position information as a shooting spot SHTNG_SPOT (step S1807). Since the stored group STRD_GROUPhas been set to Group 1 (NO to the step S1808), the information processing apparatus 102 performs comparison between the preceding image shooting spot PR_SHTNG_SPOT "B City, B Prefecture" and the shooting spot SHTNG_SPOT (step S1809). In this case, the preceding image shooting spot PR_SHTNG_SPOT "B City, B Prefecture" and the shooting spot SHTNG_SPOT "1 A-ward, A City, A Prefecture" acquired in the step S1807 are different from each other (NO to the step S1809), and therefore the information processing apparatus 102 performs comparison between the reference spot REF_SPOT and the shooting spot SHTNG_SPOT acquired in the step S1807 (step S1810). Since the reference spot REF_SPOT "1 A-ward, A City, A Prefecture" and the shooting spot SHTNG_SPOT "1 A-ward, A City, A Prefecture" are identical to each other (YES to the step S1810), the information processing apparatus 102 newly generates Group 2 (step S1811), and sets the stored group STRD_GROUP to the new group NEW_GROUP (step S1812). Then, the information processing apparatus 102 sets the preceding image shooting spot PR_SHTNG_SPOT to "1 A-ward, A City, A Prefecture" (step S1813) and sets the image C as a member of the stored group STRD_GROUPof Group 2 (step S1814).

The information processing apparatus 102 repeatedly carries out the above-described processing until the image index becomes equal to 9. Then, when processing for setting an image I is completed (step S1814), the information processing apparatus 102 performs comparison between the image index = 9 and the number of images = 9 in the step S1805 and determines that the answer to the question of the step S1805 is negative (NO), thereby terminating the grouping process, and then executes the step S1616. When the processing of the step S1616 (for displaying images on a group basis) is completed, there is displayed on the display device 150 a screen 1710 which is to be displayed upon completion of the processing, as shown in FIG. 17B.

In FIG. 17B, the screen 1710 displayed after completion of image capturing includes the program termination button 1701, the menu button display area 1702, and the image list display area 1703. The menu button display area 1702 includes the image capture button 1704, the reference spot registration button 1705, and the group edit button 1706. The image list display area 1703 includes the reduced image 1707 selected at the time of reference spot registration and new groups of images captured by clicking on the image capture button 1704. Group 1 (1711) includes two images 1712. Group 2 (1713) includes four images 1714. Group 3 (1715) includes three images 1716.

When the image capture button 1704 is clicked on the initial screen 1700 in FIG. 17A without executing the reference spot registration, the answer to the question of the step S1605 becomes affirmative (YES), and the information processing apparatus 102 captures all the images (step S1613). Since no reference spot has been registered yet, the answer to the question of the step S1614 becomes negative (NO), and all the captured images are displayed on the screen as a single group (step S1616). Thereafter, when the user selects the image A from the captured images and clicks on the reference spot registration button 1705, the processing for reference spot registration is executed. The processing is carried out according to the same procedure as described hereinabove, and therefore description thereof is omitted. Next, when the user clicks on the group edit button 1706, the grouping process is executed (step S1615), and the screen 1710 shown in FIG. 17B, which is to be displayed upon completion of image capturing, is displayed on the display device 150. It should be noted that the grouping process is identical to the process executed when the image capture button 1704 is clicked after execution of the reference spot registration, and therefore description thereof is omitted.

As described above, according to the present embodiment, by classify picked-up images on a basis of each image picked up on a reference spot, it is possible to group images picked up during a time period from one departure to next. Although in the present embodiment, determination as to whether the reference spot is passed is performed using an image picked up at the reference spot as a key, there may be employed a configuration in which a list of position information on travel spots is acquired from the GPS receiver 122 to determine whether the reference spot was passed. Further, although in the present embodiment, position information on a reference spot is acquired from an image, there may be employed a configuration in which connection to an external apparatus, such as a PC, is judged as passing a reference spot, and image grouping is performed with reference to the date and time of the connection.

In the present embodiment, the display of grouping of images is achieved by displaying the groups of images on the screen, but the display of grouping of images may be achieved by displaying a structure of folders formed in association with groups. Further, although in the present embodiment, a folder is divided for grouping of images, a file describing grouping of images may be created as a separate file. Alternatively, common metadata may be registered on a group-by-group basis.

Furthermore, although in the present embodiment, the image file-classifying process is executed by the information processing apparatus 102, the image pickup apparatus 101 may execute the same.
In this case, for example, the controller 121 carries out processing according to the procedure of the image-classifying application program stored e.g. in the external storage device 124, whereby the image file-classifying process is executed.

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image management apparatus (101, 102) for managing a plurality of image files obtained through shooting processing by an image pickup apparatus, comprising:
acquisition means (143) configured to acquire positioning information indicative of a location of the image pickup apparatus and a time of detection of the location (S401);
setting means (141) configured to set one item of the positioning information as start information (S701);
retrieval means (141) configured to retrieve an item of positioning information indicative of a location identical to the location indicated by the start information, as end information (S706); and
classification means (141) configured to classify ones of the image files, which have respective shooting times occurring between a time indicated by the start information and a time indicated by the end information, into a same group (S404).

2. The image management apparatus according to claim 1, wherein the group has a hierarchical structure (FIG. 10).

3. An image management apparatus (102) for managing a plurality of image files obtained through shooting processing by an image pickup apparatus, comprising:
acquisition means (143) configured to acquire positioning information indicative of a location of the image pickup apparatus and a time of detection of the location (S401);
setting means (141) configured to set one item of the positioning information as start information;
calculation means (141) configured to calculate, for each item of the positioning information, a distance between the location indicated by the item of the positioning information and a location indicated by the start information;
retrieval means (141) configured to retrieve an item of the positioning information at which the calculated distance changes from decreasing to increasing, as end information; and
classification means (141) configured to classify ones of the image files, which have respective shooting times occurring between a time indicated by the start information and a time indicated by the end information, into a same group.

4. An image management apparatus (101) for managing a plurality of image files obtained through shooting processing by an image pickup apparatus, comprising:
acquisition means (122) configured to acquire positioning information indicative of a location of the image pickup apparatus and a time of detection of the location;
setting means (121, 128, 131) configured to set a location input in response to a user operation, as reference position information (S1203);
comparison means (121) configured to perform comparison between a location indicated by an item of the positioning information and the location indicated by the reference position information (S1210);
generation means (121, 124) configured to newly generate a group when it is determined through the comparison that the location indicated by the item of the positioning information is identical to the location indicated by the reference position information (S1307); and
storing means (121, 124) configured to store image files obtained through shooting processing by the image pickup apparatus after the new generation of the group by said generation means, in association with the newly generated group (S1306).

5. An image management apparatus (102) for managing a plurality of image files obtained through shooting processing by an image pickup apparatus, comprising:
selection means (141, 146, 149) configured to select one of the image files (S1603);
setting means (141) configured to set a shooting location of the selected image file, as reference position information (S1612);
comparison means (141) configured to perform comparison between a shooting location of an image file different from the selected image file and the shooting location indicated by the reference position information (S1614);
generation means (141, 142) configured to newly generate a group when it is determined through the comparison that the shooting location of the different image file is identical to the shooting location indicated by the reference position information (S1615, S1811); and
storing means (141, 142) configured to store image files obtained through shooting processing by the image pickup apparatus later than the different image file, in association with the newly generated group (S1615, S1812, S1814).

6. An image management apparatus (102) for managing a plurality of image files obtained through shooting processing by an image pickup apparatus, comprising:
selection means (141, 146, 149) configured to select one of the image files (S1603);
setting means (141) configured to set a shooting location of the selected image file, as reference position information (S1612);
storing means (141, 142) configured to store the image files in association with a group in an order in which the image files were shot (S1613);
comparison means (141) configured to perform comparison between a shooting location of an image file different from the selected image file and the shooting location indicated by the reference position information (S1614); and
generation means (141, 142) configured to newly generate a group when it is determined through the comparison that the shooting location of the different image file is identical to the shooting location indicated by the reference position information (S1615, S1811),
wherein when the new group is generated by said generation means, said storing means (141, 142) changes a associated destination of ones of the image files subjected to the comparison up to the new generation of the group, to the newly generated group (S1615, S1812, S1814).

7. An image management apparatus (102) for managing a plurality of image files obtained through shooting processing by an image pickup apparatus, comprising:
acquisition means (141, 143) configured to acquire positioning information indicative of a location of the image pickup apparatus and a time of detection of the location (S1204);
setting means (121, 128, 131) configured to set a location input in response to a user operation, as reference position information (S1203);
storing means (121, 124) configured to store the image files in association with a group in an order in which the image files were shot (S1306);
comparison means (121) configured to perform comparison between a location indicated by an item of the positioning information and the location indicated by the reference position information (S1210); and
generation means (121, 124) configured to newly generate a group when it is determined through the comparison that the location indicated by the item of the positioning information is identical to the location indicated by the reference position information (S1307),
wherein when the new group is generated by said generation means, said storing means (121, 124) changes a associated destination of ones of the image files subjected to the comparison up to the new generation of the group, to the newly generated group.

8. A method of controlling an image management image management apparatus for managing a plurality of image files obtained through shooting processing by an image pickup apparatus, comprising:
acquiring positioning information indicative of a location of the image pickup apparatus and a time of detection of the location;
setting one item of the positioning information as start information;
retrieving an item of positioning information indicative of a location identical to the location indicated by the start information, as end information; and
classifying ones of the image files, which have respective shooting times occurring between a time indicated by the start information and a time indicated by the end information, into a same group.

9. A method of controlling an image management apparatus for managing a plurality of image files obtained through shooting processing by an image pickup apparatus, comprising:
acquiring positioning information indicative of a location of the image pickup apparatus and a time of detection of the location;
setting one item of the positioning information as start information;
calculating, for each item of the positioning information, a distance between the location indicated by the item of the positioning information and a location indicated by the start information;
retrieving an item of the positioning information at which the calculated distance changes from decreasing to increasing, as end information; and
classifying ones of the image files, which have respective shooting times occurring between a time indicated by the start information and a time indicated by the end information, into a same group.

10. A method of controlling an image management apparatus for managing a plurality of image files obtained through shooting processing by an image pickup apparatus, comprising:
acquiring positioning information indicative of a location of the image pickup apparatus and a time of detection of the location;
setting a location input in response to a user operation, as reference position information;
performing comparison between a location indicated by an item of the positioning information and the location indicated by the reference position information;
newly generating a group when it is determined through the comparison that the location indicated by the item of the positioning information is identical to the location indicated by the reference position information; and
storing image files obtained through shooting processing by the image pickup apparatus after the new generation of the group, in association with the newly generated group.

11. A method of controlling an image management apparatus for managing a plurality of image files obtained through shooting processing by an image pickup apparatus, comprising:
selecting one of the image files;
setting a shooting location of the selected image file, as reference position information;
performing comparison between a shooting location of an image file different from the selected image file and the shooting location indicated by the reference position information;
newly generating a group when it is determined through the comparison that the shooting location of the different image file is identical to the shooting location indicated by the reference position information; and
storing image files obtained through shooting processing by the image pickup apparatus later than the different image file, in association with the newly generated group.

12. A method of controlling an image management apparatus for managing a plurality of image files obtained through shooting processing by an image pickup apparatus, comprising:
selecting one of the image files;
setting a shooting location of the selected image file, as reference position information;
storing means configured to store the image files in association with a group in an order in which the image files were shot;
performing comparison between a shooting location of an image file different from the selected image file and the shooting location indicated by the reference position information;
newly generating a group when it is determined through the comparison that the shooting location of the different image file is identical to the shooting location indicated by the reference position information; and
changing, when the new group is generated, a associated destination of ones of the image files subjected to the comparison up to the new generation of the group, to the newly generated group.

13. A method of controlling an image management apparatus for managing a plurality of image files obtained through shooting processing by an image pickup apparatus, comprising:
acquiring positioning information indicative of a location of the image pickup apparatus and a time of detection of the location;
setting a location input in response to a user operation, as reference position information;
storing the image files in association with a group in an order in which the image files were shot;
performing comparison between a location indicated by an item of the positioning information and the location indicated by the reference position information;
newly generating a group when it is determined through the comparison that the location indicated by the item of the positioning information is identical to the location indicated by the reference position information; and
changing, when the new group is generated, a associated destination of ones of the image files subjected to the comparison up to the new generation of the group, to the newly generated group.

14. A non-transitory computer-readable storage medium storing a computer-executable program for causing a computer to execute a method according to claim 8.

15. A non-transitory computer-readable storage medium storing a computer-executable program for causing a computer to execute a method according to claim 9.

16. A non-transitory computer-readable storage medium storing a computer-executable program for causing a computer to execute a method according to claim 10.

17. A non-transitory computer-readable storage medium storing a computer-executable program for causing a computer to execute a method according to claim 11.

18. A non-transitory computer-readable storage medium storing a computer-executable program for causing a computer to execute a method according to claim 12.

19. A non-transitory computer-readable storage medium storing a computer-executable program for causing a computer to execute a method according to claim 13.
